# EUROPEAN PATENT SPECIFICATION

(11) **EP 4 664 019 B1**
(45) Date of publication and mention of the grant of the patent: **09.12.2026**
(21) Application number: 24181007.6
(22) Date of filing: 10.06.2024
(51) Int. Cl.: F24D 3/02, F24D 19/10, G05D 23/19

(54) **CONTROL OF HEATING, VENTILATION, AIR-CONDITIONING**
HEIZUNGS-, LÜFTUNGS- UND KLIMAANLAGENSTEUERUNG
COMMANDE DE CHAUFFAGE, VENTILATION, CLIMATISATION

(43) Date of publication of application: 17.12.2025
(73) Proprietor: Siemens Schweiz AG, 8047 Zürich (CH)
(72) Inventor: Vogt, Andreas, 6005 Luzern (CH)
(74) Representative: Siemens Patent Attorneys

(56) References cited:
- EP-A1- 3 722 680
- EP-A2- 1 936 288
- EP-A2- 2 420 748
- US-A1- 2015 369 494

## Description

### Background

The present disclosure deals with control of heating and/or ventilation and/or air-conditioning installations. More specifically, the present disclosure focuses on hydronic balancing. The instant disclosure also relates to heating and/or ventilation and/or air-conditioning installations with a control device as disclosed hereinafter.

Installations for heating and/or ventilation and/or air-conditioning (HVAC) are commonly made up of a plurality of circuits. Each circuit comprises one or more terminal units to provide heating to various parts of a building. Terminal units generally are heating devices. A terminal unit of a domestic heating system can, by way of non-limiting example, comprise a radiator. A terminal unit of a heating system can, by way of another non-limiting example, comprise a heated floor.

In HVAC installations, numerous factors such as pipe cross-sections, valve characteristics, positions of terminal units within the distribution network etc affect flow through the circuits. These factors yield hydraulic resistances that vary throughout the system. Hydraulic resistances generally relate pressure drop to flow of a coolant or to flow of a heating medium.

HVAC installations such as heating systems require hydronic balancing. Hydronic balancing overcomes issues due to different hydraulic resistances of the circuits of a HVAC installation. Hydronic balancing of heating installations of commercial and/or industrial and/or residential sites ensures that each circuit of a system experiences adequate flow.

The actual arrangement of a distribution network is often no longer known in existing buildings or in historic buildings. Estimates of the hydraulic resistances of the various parts of a HVAC installation must then be used. In addition, estimates may be used of the amount of heating required to maintain comfort in each room. Due to those uncertainties, hydronic balancing will be difficult to achieve in existing buildings and/or in historic buildings.

The aforementioned practical difficulties may lead to conservative estimates of the amount of heating required to maintain comfort. Those conservative estimates commonly involve radiators with values of supply temperatures that are excessive. Consequently, the thermal losses of boilers in the installation are unnecessarily high.

In the absence of proper hydronic balancing, parts of a building will be oversupplied or will be undersupplied with thermal energy. That is, the HVAC system will not be able to supply the required heating. The HVAC system will thus operate inefficiently. Also, parts of a building may experience excessive flow or discomfort.

Excessive flow typically involves noisy radiators and/or noisy valves. Excessive flow can also involve noisy heated floors. In addition, excessive flow increases wear of mechanical parts such as electromechanical valves and/or membrane valves and/or pumps. As for electric pumps, excessive flow further implies waste of electric energy.

A European patent EP3115703B1 was granted on 18 March 2020 and claims a priority date of 3 July 2015. The patent EP3115703B1 deals with control of heating, ventilation, air-conditioning. According to this patent, temperature rise quantities are determined for a plurality of valves. A limit position is then determined based on the temperature rise quantity and the valves are adjusted to their respective limit positions. A central pump of an installation then lowers its pressure until one of the valves reaches an upper limit position.

A European patent application EP2912384A1 was filed on 31 July 2013 and claims a priority date of 24 September 2012. EP2912384A1 deals with a method of operating a heating installation. According to this application, a heating installation comprises a minimum of two radiators and a central controller. Hydronic balancing is carried out based on the hydraulically least favourable valve in the installation. The hydronic continues until the opening degree of the least favourable valve reaches a maximum position. To that end, a flow rate of a pump is adjusted and the adjustment involves a heating curve and opening degrees of valves.

Still another European patent EP3650761B1 was granted on 11 November 2020 and claims a priority date of 12 November 2018. EP3650761B1 deals with control of heating, ventilation, air-conditioning. According to EP3650761B1, a time series of position signals is recorded from each valve of an installation. A characteristic position is then determined for the time series by applying a statistical quantity such as a mean to the respective time series. The characteristic is afterwards rescaled.

A plurality of temperatures is also recorded and the temperatures are compared to target values indicative of optimum comfort. Based on the comparisons, deviations from optimum comfort provided. The deviations from optimum comfort are used as error signals to produce control signals from the rescaled characteristics, the control signals indicating balanced comfort. The rescaled characteristics and the control signals are eventually weighted and added to produce upper limit positions for the valves. Further relevant patents dealing with the control of HAVC systems are: EP 2 420 748 A2, EP 3 722 680 A1, US 2015/369494 A1 and EP 1 936 288 A2.

The present disclosure improves on control of HVAC installations. The instant disclosure aims at providing hydronic balancing without prior knowledge of the hydraulic resistance of each individual circuit of an installation.

### Summary

The present disclosure provides hydronic balancing in the absence of in-depth knowledge of the details of a distribution network. Control in accordance with this disclosure is particularly useful in conjunction with installations in existing buildings or in historic buildings. Control in accordance with this disclosure is typically implemented as part of an installation for heating and/or ventilation and/or air-conditioning.

A control device as described hereinafter functions to communicate with (at least two of) the valves of a HVAC installation. These valves are operable to communicate with the control device. That is, quantities such as opening degrees and/or outputs of proportional and/or integral controllers and/or outputs of proportional and/or integral and/or derivative controllers are transmitted. It is also envisaged that room temperatures are transmitted. The control device is operable to communicate a target position to the valves of an installation and to adjust flow through a pump of the system. To achieve hydronic balancing, the control device in a first step determines if there is an oversupply or an undersupply of thermal power within the system.

Any optimisation requires that the central pump and/or the distribution pump is in daily operation for more than a predetermined amount of time. The predetermined amount can, by way of non-limiting example, be three hours or six hours or twelve hours. If the central pump and/or the distribution pump operates for less than the predetermined amount of time, the demand will be low. Consequently no optimisation needs to take place. In an embodiment, no optimisation will take place if the demand is low.

The control device in a second steps reads opening degrees of the valves of the thermal energy exchangers of the installation. More specifically, the controller can read percentages indicative of valve opening of the valves of the thermal energy exchangers. In the event of an oversupply, a percentage of the valves of the system will be selected. A minimum of one valve will be selected. The selected valve or the selected valves exhibit
- the lowest degree(s) of opening and/or
- the shortest duration(s) of being open to more than a predetermined degree of opening.

The opening degrees of the one or more selected valves are then limited. The opening degrees are limited such that a limit position is decremented. The decrement can, by way of non-limiting example, be at least two percent or five percent or less than ten percent. If an opening degree reaches a threshold, the limit position will no longer be reduced.

In the event of an undersupply, a percentage of the valves of the system will also be selected. A minimum of one valve will be selected. The selected valve or the selected valves exhibit
- the greatest degree(s) of opening and/or
- the longest duration(s) of being open to more than a predetermined degree of opening.

The one or more selected valves subsequently open. That is, one or more limit positions are incremented. An increment can, by way of non-limiting example, be at least two percent or five percent or less than ten percent. If a limit position corresponds to a fully open position, the limit position will no longer change.

### Brief description of the drawings

Various features will become apparent to those skilled in the art from the following detailed description of the disclosed non-limiting embodiments. The drawings that accompany the detailed description can be briefly described as follows:
FIG 1 is a schematic drawing of a prior art HVAC installation.
FIG 2 details the hydraulic characteristics of the installation of FIG 1.
FIG 3 is a schematic drawing of a HVAC installation with a control unit.

### Detailed description

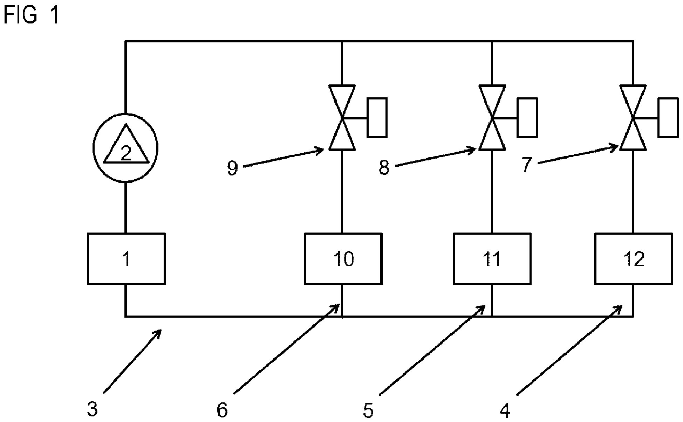

A control device of the present disclosure is typically part of an installation for heating and/or ventilation and/or air-conditioning. A HVAC installation as shown in FIG 1 comprises a supply of thermal energy 1 such as a heat pump, a gas-fired burner, an oil-fired burner, a cogeneration plant, a (polymer electrolyte membrane) fuel cell, a silicone oxide fuel cell etc. A pump 2 circulates a suitable medium, such as a heating medium or a refrigerant, through the closed-loop circuit 3. The medium can, by way of non-limiting example, be a R32, R134a, R290, R410A, R450A, R452A, R513A, R454C, R1234yf, or a R1234ze(E) refrigerant.

The pump 2 preferably comprises an electric pump. The pump 2 ideally is an electric pump. It is envisaged that the pump 2 comprises a variable speed pump. It is still envisaged that the pump 2 is a variable speed pump. In a special embodiment, a pulse-width modulation unit feeds the winding(s) of a motor of the pump 2 in accordance with a duty cycle.

According to an aspect of the present disclosure, the pump 2 comprises a distribution pump 2. According to a special aspect of the present disclosure, the pump 2 is a distribution pump 2.

In other words, the instant disclosure deals with a controller 15 configured to adjust the pressure generated by the pump 2. In so doing, the motor of the pump 2 can be supplied with a pulse-width modulated signal.

The closed-loop circuit 3 of FIG 1 is made up of a plurality of loops 4, 5, and **6.** A valve 7, 8, and 9 is arranged in each loop 4, 5, and 6. The valves 7, 8, and 9 are used to adjust flow through their respective loops 4, 5, and 6. At least one of the valves 7, 8, and 9 is a electromechanical valve. It is envisaged that all valves 7, 8, and 9 are electromechanical valves. Each of the loops 4, 5, and 6 shown in FIG 1 has a valve 7, 8, and 9. In a special embodiment, there is at least one loop with no valve. In another embodiment, at least one loop 4, 5, or 6 comprises a plurality of valves. At least one of the valves 7, 8, or 9 of the installation preferably measures temperature and/or adjusts flow in accordance with temperature.

The present disclosure advantageously applies to large installations for heating and/or ventilation and/or air-conditioning. Large installations typically require an annual intake of energy of more than 100'000 kWh. More specifically, large installations can require an annual intake of electric energy of more than 613'200 kWh. Large installations can also require an annual intake of energy of more than 613'200 kWh. More specifically, large installations can require an annual intake of electric energy of more than 100'000 kWh. Large installations can still require an annual intake of energy of more than 2'540'400 kWh. More specifically, large installations can require an annual intake of electric energy of more than 2'540'400 kWh.

In other words, the controller 15 of the instant disclosure is configured to connect to the valves 7 - 9, and is configured to read from each of the valves 7 - 9 the result of a first measurement. The first measurement can, by way of non-limiting example, comprise a first measurement of an opening degree. More specifically, the first measurement can be a first measurement of an opening degree. The first measurement can, by way of another non-limiting example, comprise a first measurement of a valve position. More specifically, the first measurement can be a first measurement of a valve position. The first measurement can, by way of still another non-limiting example, comprise a first measurement of temperature. More specifically, the first measurement can be a first measurement of temperature.

It is still envisaged that the first measurement comprises a first measurement of an opening degree and/or a first measurement of temperature.

The controller 15 advantageously comprises a microcontroller and/or a microprocessor. In an embodiment, the controller 15 is a microcontroller and/or is a microprocessor. The controller 15 preferably comprises a memory such as a non-volatile memory. That is, the controller 15 can comprise a microcontroller and a non-volatile memory. The controller 15 can also comprise a microprocessor and a non-volatile memory. The controller 15 can still be a microcontroller having a non-volatile memory. The controller 15 can also be a microprocessor having a non-volatile memory.

The loops 4, 5, 6 also each provide a thermal energy exchanger 10, 11, 12. If the HVAC system of FIG 1 is a heating installation, the thermal energy exchanger 10, 11, 12 will, for instance, be a radiator. Each thermal energy exchanger 10, 11, 12 can also comprise a plurality of heat exchangers such as a plurality of radiators.

It is envisaged that each loop 4, 5, and 6 supplies a part of a building with cold and/or with heat. In a special embodiment, these parts are rooms of a building. The building can, for instance, be a commercial and/or industrial and/or residential site. More specifically, the building can be an existing site and/or a historic site and/or a legacy building.

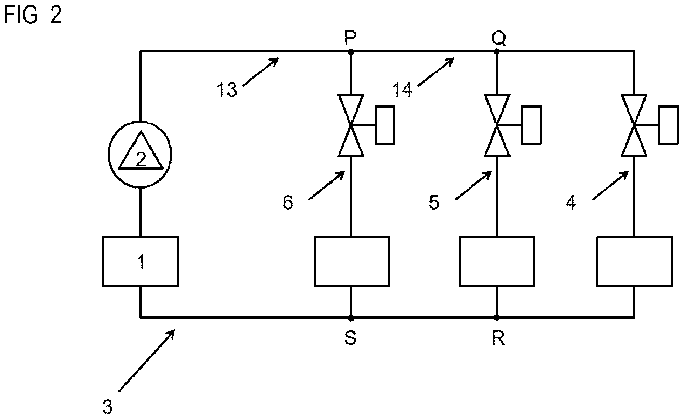

Each of the loops 4, 5, 6 shown in FIG 2 has a hydraulic resistance. Let *b₄* be the hydraulic resistance of loop 4, *b₅* the hydraulic resistance of loop 5, and *b₆* the hydraulic resistance of loop 6. Due to symmetry of the distribution network, the hydraulic resistances of the branches P -> Q and R -> S can be combined into a single resistance b₁₄. Likewise, a resistance value b₁₃ describes the contributions of all the branches and loops to the left of points P and Q.

FIG 2 shows three loops in total. The first loop 4 comprises the branches and the loops with resistances *b₁₃, b₁₄,* and *b₄*. The second loop 5 comprises the branches and the loops with resistances *b₁₃, b₁₄,* and *b₅.* The third loop 6 comprises the branches and the loops with resistances *b₁₃* and *b₆.*

Let *V̇₄* be the flow through loop 4, *V̇₅* be the flow through loop 5, and *V̇₆* be the flow through loop 6. The branch with resistance *b₁₃* then experiences a flow *V̇₁₃* which is the sum of all flow values = *V̇₄, V̇₅,* and *V̇₆* through the loops 4, 5, and 6: ${\dot{V}}_{13} = {\dot{V}}_{4} + {\dot{V}}_{5} + {\dot{V}}_{6}$

The flow *V̇*₁₃ through the branch with resistance b₁₃ yields a pressure drop *Δp₁₃* which can commonly be approximated as follows: ${Δp}_{13} = {b}_{13} ⋅ {\dot{V}}_{13}^{2}$

The values *Δp₄, Δp₅, Δp₆* of pressure drop in the loops 4, 5 and 6 are analogously approximated as: ${Δp}_{4} = {b}_{4} ⋅ {\dot{V}}_{4}^{2}$ ${Δp}_{5} = {b}_{5} ⋅ {\dot{V}}_{5}^{2}$ ${Δp}_{6} = {b}_{6} ⋅ {\dot{V}}_{6}^{2}$

The overall drop of pressure ΣΔ*p*_{L4} through loop 4 then reads: $\sum {Δp}_{L 4} = Δ {p}_{13} + Δ {p}_{14} + Δ {p}_{4}$

Likewise, the overall drop of pressure ΣΔp_{L5} through loop 5 reads: $\sum {Δp}_{L 5} = Δ {p}_{13} + Δ {p}_{14} + Δ {p}_{5}$

Likewise, the overall drop of pressure ΣΔp_{L6} through loop 6 reads: $\sum {Δp}_{L 6} = Δ {p}_{13} + Δ {p}_{6}$

The below example assumes hydraulic resistances *b₁₃* and *b₁₄* of 0.4 Pa/(l/h)². Also, the hydraulic resistances *b₄, b₅,* and *b₆* of loops 4, 5, and 6 are all 1.2 Pa/(l/h)². The flow values *V̇₄* = 150 l/h, *V̇₅ =* 150 l/h, and *V̇₆* = 229 l/h through loops 4, 5, and 6 yield a flow ${\dot{V}}_{13} = {\dot{V}}_{4} + {\dot{V}}_{5} + {\dot{V}}_{6} = 529 l / h .$

Analogously, the flow V̇₁₄ through the branch with resistance b₁₄ is ${\dot{V}}_{14} = {\dot{V}}_{4} + {\dot{V}}_{5} = 300 l / h .$

The pressure drop Δp₁₃ is $Δ {p}_{13} = {b}_{13} ⋅ {\dot{V}}_{13}^{2} = 111936 Pa .$ and the pressure drop Δp*₁₄* is $Δ {p}_{14} = {b}_{14} ⋅ {\dot{V}}_{14}^{2} = 36000 Pa .$

The pressure drops Δ*p₄,* Δ*p₅,* and Δ*p₆* in loops 4, 5, and 6 are $Δ {p}_{4} = {b}_{4} ⋅ {\dot{V}}_{4}^{2} = 27000 Pa ,$ $Δ {p}_{5} = {b}_{5} ⋅ {\dot{V}}_{5}^{2} = 27000 Pa ,$ and $Δ {p}_{6} = {b}_{6} ⋅ {\dot{V}}_{6}^{2} = 62929 Pa .$

The values ΣΔ*p*_{L4}, ΣΔ*p*_{L5}, and ΣΔ*p*_{L6} for the overall drop of pressure within loops 4, 5, and 6 thus read $\sum {Δp}_{L 4} = Δ {p}_{13} + Δ {p}_{14} + Δ {p}_{4} = 174936 Pa$ $\sum Δ {p}_{L 5} = Δ {p}_{13} + Δ {p}_{14} + Δ {p}_{5} = 174936 Pa$ $\sum {Δp}_{L 6} = Δ {p}_{13} + Δ {p}_{6} = 174936 Pa$

In other words, the overall drop of pressure within loop 4 is 174936 Pa. The overall drop of pressure within loop 5 is 174936 Pa and the overall drop of pressure within loop 6 is 174936 Pa. All the values of overall pressure drop are the same.

Now assume that pump 2 of the installation generates a pressure of 200000 Pa at startup. Also, assume that all the valves 7, 8, and 9 are in their fully open positions. It follows that $\sum Δ {p}_{L 4} = \sum Δ {p}_{L 4} = \sum Δ {p}_{L 4} = 200000 Pa .$

Since the hydraulic resistances *b₁₃ = b₁₄ =* 0.4 Pa/(l/h)² and *b₄ = b₅ = b₆ =* 1.2 Pa/(l/h)² remain the same, the volume flows *V̇₄, V̇₅,* and *V̇₆* become ${\dot{V}}_{4} = {\dot{V}}_{5} = 160 l / h ,$ and ${\dot{V}}_{6} = 244 l / h .$

The ideal flow through loop 6 is the flow that maintains target temperature in the room that corresponds to loop 6. The present example assumes the ideal flow is 60 l/h for loop 6, 120 l/h for loop 5 and 100 l/h for loop 4. The actual flow through loop 6 is 244 l/h and exceeds ideal flow by more than a factor four. The room that corresponds to loop 6 will be the first room to reach (to approach) its target temperature. After system startup, the opening degrees and/or flow values *s₄*, *s₅,* and *s₆* for loops 4, 5, and 6 become ${s}_{4} = 62.5 % for loop 4 ,$ ${s}_{5} = 75 % for loop 5 ,$ and ${s}_{6} = 25 % for loop 6 .$

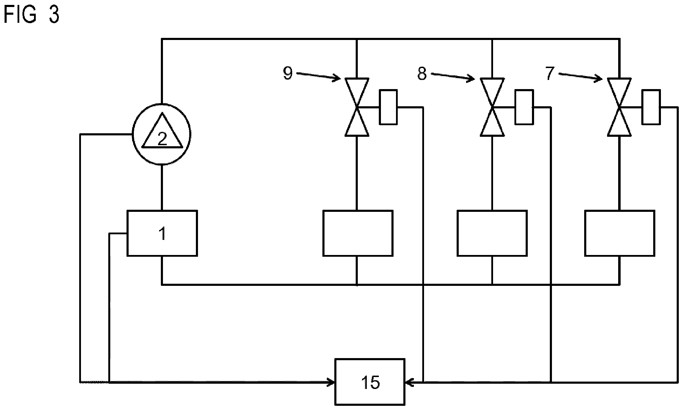

The installation as shown in FIG 3 adds a controller 15 to the installation. The controller 15 of FIG 3 is in communication with the pump 2. The controller 15 of FIG 3 is also configured set the pressure applied by the pump 2. The controller 15 also functions to communicate with the valves 7 - 9 of the installation and vice versa. That is, the valves 7 - 9 communicate their opening degrees and/or flow values *s₄*, *s₅,* and *s₆* to the (central) controller 15. The opening degrees and/or flow values s₄, s₅, and s₆ correspond to valve positions such as fully open or fully closed. The opening degrees and/or flow values *s₄*, *s₅,* and *s₆* can also correspond to valve strokes such as fully open or fully closed.

The controller 15 first determines if the pump 2 is in daily operation for more than a predetermined amount of time. The predetermined amount of time can, by way of non-limiting examples, be at least three hours or at six hours or less than twelve hours. Operation of the pump 2 during the predetermined amount of time indicates a significant demand for thermal energy. More specifically, operation of the pump 2 during the predetermined amount of time indicates a significant demand for cold and/or a significant demand for heat.

In a special embodiment, the controller 15 first calculates if the distribution pump 2 is in daily operation for more than a predetermined amount of time. The predetermined amount of time can, by way of non-limiting examples, be at least three hours or at six hours or less than twelve hours. Operation of the distribution pump 2 during the predetermined amount of time indicates a significant demand for thermal energy. More specifically, operation of the distribution pump 2 during the predetermined amount of time indicates a significant demand for cold and/or a significant demand for heat.

In an embodiment, the controller 15 comprises a clock such as a clock based on complementary metal-oxide semiconductors. The controller 15 is in communication with the pump 2 and reads signals from or to the pump 2, wherein the signals indicate that the pump 2 is in operation. Ideally, the controller 15 periodically reads such signals. The controller 15 can, by way of non-limiting example, periodically receive signals indicative of the pump 2 being in operation every fifteen minutes. The controller 15 can, by way of another non-limiting example, periodically receive signals indicative of the pump 2 being in operation every ten minutes. The controller 15 can, by way of still another non-limiting example, periodically receive signals indicative of the pump 2 being in operation every thirty minutes. The controller 15 can produce timestamps based on the signals indicative of operation of the pump 2. The controller 15 can also count the number of signals received, wherein each signal indicates that the pump 2 is in operation. The number of signals is then multiplied with an interval to estimate a daily duration of operation of the pump **2.** The interval can, by way of non-limiting examples, be ten minutes or fifteen minutes or thirty minutes. The interval is ideally commensurate with the periodic reception of signals from or to the pump 2. In a special embodiment, the number of signals is multiplied with an interval to determine a daily duration of operation of the pump 2. The interval can, by way of non-limiting examples, be ten minutes or fifteen minutes or thirty minutes. The interval is ideally commensurate with the periodic reception of signals from or to the pump 2.

In an embodiment, the controller 15 comprises a or the clock such as a or the clock based on complementary metal-oxide semiconductors. The controller 15 is in communication with the distribution pump 2 and reads signals from the distribution pump 2, wherein the signals indicate that the distribution pump 2 is in operation. Ideally, the controller 15 periodically reads such signals. The controller 15 can, by way of non-limiting example, periodically receive signals indicative of the distribution pump 2 being in operation every fifteen minutes. The controller 15 can, by way of another non-limiting example, periodically receive signals indicative of the distribution pump 2 being in operation every ten minutes. The controller 15 can, by way of still another non-limiting example, periodically receive signals indicative of the distribution pump 2 being in operation every thirty minutes. The controller 15 can produce timestamps based on the signals indicative of the distribution pump 2 operating. The controller 15 can also count the number of signals received, wherein each signal indicates that the distribution pump 2 is in operation. The number of signals is then multiplied with an interval to estimate a daily duration of operation of the distribution pump 2. The interval can, by way of non-limiting examples, be ten minutes or fifteen minutes or thirty minutes. The interval is ideally commensurate with the periodic reception of signals from the distribution pump 2. In a special embodiment, the number of signals is multiplied with an interval to determine a daily duration of operation of the distribution pump 2. The interval can, by way of non-limiting examples, be ten minutes or fifteen minutes or thirty minutes. The interval is ideally commensurate with the periodic reception of signals from the distribution pump 2.

Once a significant demand has been established, the system deals with an oversupply of thermal energy and/or with an undersupply of thermal energy.

In the event of an oversupply of thermal energy, maximum valve positions are collected for the valves 7 - 9 of the system. It is envisaged that the controller 15 queries the valves 7 - 9 and receives signals indicative of maximum positions for each of the valves 7 - 9. The controller 15 preferably comprises a memory such as a non-volatile memory and stores maximum positions of the valves 7 - 9 in its memory. The controller 15 can, by way of non-limiting example, store maximum valve positions in a lookup table. Maximum positions of the valves 7 - 9 of the system can later be determined from the lookup table.

In a special embodiment, the controller 15 comprises an analog-to-digital converter. The analog-to-digital converter provides conversion of analog signals indicative of maximum positions into (digital) measures. The analog-to-digital converter can be an integral part of the controller 15. To achieve compactness, the analog-to-digital converter and the controller 15 can be arranged on the same system-on-a-chip.

In another special embodiment, the controller 15 comprises a sigma-delta converter. The sigma-delta converter provides conversion of analog signals indicative of maximum positions into (digital) measures. The sigma-delta converter can be an integral part of the controller 15. To achieve compactness, the sigma-delta converter and the controller 15 can be arranged on the same system-on-a-chip.

The controller 15 also reads valve positions and/or signals indicative of control output from the valves 7 - 9. The signals indicative of control output can, by way of non-limiting example, be signals indicative of an output of a proportional and integral controller. To that end, the valves 7 - 9 can comprise proportional and integral controllers to adjust their positions as a function of actual temperatures and set points.

The signals indicative of control output can, by way of another non-limiting example, be signals indicative of an output of a proportional and integral and derivative controller. The valves 7 - 9 can comprise proportional and integral and derivative controllers to adjust their positions as a function of actual temperatures and set points.

The controller 15 reads time series of valve positions and/or time series of signals indicative of control output. The controller 15 identifies a percentage of valves 7 - 9 with the lowest valve positions and/or with the lowest signals indicative of control output.

According to an aspect of the present disclosure, the controller 15 calculates an arithmetic mean of valve positions and/or of the signals indicating control output. The controller 15 preferably calculates a separate arithmetic mean for every valve 7 - 9 of the system. The controller 15 selects a percentage of the valves 7 - 9 with the lowest arithmetic mean. The percentage can, by way of non-limiting example, be at least five percent or ten percent or less than twenty percent. The controller 15 preferably selects at least one valve 7 - 9, wherein the selected valve 7 - 9 has the lowest arithmetic mean.

According to another aspect of the present disclosure, the controller 15 calculates a geometric mean of valve positions and/or of the signals indicating control output. The controller 15 preferably calculates a separate geometric mean for every valve 7 - 9 of the system. The controller 15 selects a percentage of the valves 7 - 9 with the lowest geometric mean. The percentage can, by way of non-limiting example, be at least five percent or ten percent or less than twenty percent. The controller 15 preferably selects at least one valve 7 - 9, wherein the selected valve 7 - 9 has the lowest geometric mean.

The controller 15 can still read states, wherein the states are indicative of the respective valve 7 - 9 being closed or being open. More specifically, the states can indicate that the respective valve 7 - 9 is fully closed or is fully open. The controller 15 can still further read control signals, wherein the control signals are indicative of the respective valve 7 - 9 being closed or being open. More specifically, the control signals can indicate that the respective valve 7 - 9 is fully closed or is fully open.

The controller 15 preferably reads time series of states and/or of control signals, wherein the control signals indicate that the respective valve 7 - 9 is closed or is open. More specifically, the control signals of the time series can indicate that the respective valve 7 - 9 is fully closed or is fully open.

In an embodiment, the controller 15 comprises a or the clock such as a or the clock based on complementary metal-oxide semiconductors. The controller 15 is in communication with each valve 7 - 9. The controller 15 reads signals from each valve 7 - 9, wherein the signals indicate that the respective valves 7 - 9 are closed or are open. Advantageously, the controller 15 periodically reads such signals. The controller 15 can, by way of non-limiting example, periodically receive signals indicative of each valve 7 - 9 being closed or open every fifteen minutes. The controller 15 can, by way of another non-limiting example, periodically receive signals indicative of each valve 7 - 9 being closed or open every ten minutes. The controller 15 can, by way of still another non-limiting example, periodically receive signals indicative of each valve 7 - 9 being closed or open every thirty minutes. The frequency of reading signals is advantageously the same for all valves 7 - 9.

The controller 15 can produce timestamps based on the signals indicative of each valve 7 - 9 being closed or being open. The controller 15 can also count the number of signals received, wherein each signal indicates that a valve 7 - 9 is closed or is open. The number of signals indicative of an open valve 7 - 9 is then multiplied with an interval. That way, a duration of each valve 7 - 9 being open is estimated and/or is determined. The interval can, by way of non-limiting examples, be ten minutes or fifteen minutes or thirty minutes. The interval is preferably commensurate with the periodic reception of signals from the valves 7 - 9. The interval more preferably matches the interval of the periodic reception of signals from the valves 7 - 9. The interval is ideally the same for all valves 7 - 9. In a special embodiment, the number of signals is multiplied with an interval to determine a daily duration of each valve 7 - 9 being open. The interval can, by way of non-limiting examples, be ten minutes or fifteen minutes or thirty minutes. The interval is preferably commensurate with the periodic reception of signals from the valves 7 - 9. The interval more preferably matches the interval of the periodic reception of signals from the valves 7 - 9. The interval is ideally the same for all valves 7 - 9.

The controller 15 advantageously reads signals from each valve 7 - 9, the signals indicating the respective valves 7 - 9 are fully closed or fully open. Advantageously, the controller 15 periodically reads such signals. The controller 15 can, by way of non-limiting example, receive signals indicative of each valve 7 - 9 being fully closed or fully open every fifteen minutes. The controller 15 can, by way of another non-limiting example, receive signals indicative of each valve 7 - 9 being fully closed or fully open every ten minutes. The controller 15 can, by way of still another non-limiting example, receive signals indicative of each valve 7 - 9 being fully closed or fully open every thirty minutes. The frequency of reading signals is advantageously the same for all valves 7 - 9.

The controller 15 can produce timestamps based on the signals indicative of each valve 7 - 9 being fully closed or being fully open. The controller 15 can also count the number of signals received, wherein each signal indicates that a valve 7 - 9 is fully closed or is fully open. The number of signals indicative of a fully open valve 7 - 9 is multiplied with an interval. That way, a duration of each valve 7 - 9 being fully open is estimated and/or is determined. The interval can, by way of non-limiting examples, be ten minutes or fifteen minutes or thirty minutes. The interval is ideally commensurate with the periodic reception of signals from the valves 7 - **9.** In a special embodiment, the number of signals is multiplied with an interval to determine a daily duration of each valve 7 - 9 being fully open. The interval can, by way of non-limiting examples, be ten minutes or fifteen minutes or thirty minutes. The interval is ideally commensurate with the periodic reception of signals from the valves 7 - 9. The interval is ideally the same for all valves 7 - 9.

The controller 15 eventually identifies a percentage of valves 7 - 9 with the shortest durations of being open. The percentage can, by way of non-limiting example, be at least five percent or ten percent or less than twenty percent. The controller 15 preferably selects at least one valve 7 - 9, wherein the selected valve 7 - 9 has the shortest opening duration.

At least one position of the at least one selected valve 7 - 9 is then limited. More specifically, a limit position of the at least one selected valve 7 - 9 is decremented. The decrement can, by way of non-limiting example, be at least two percent of the maximum degree of opening or of the maximum valve position. The decrement can, by way of another non-limiting example, be five percent of the maximum degree of opening or five percent of the maximum valve position. The decrement can, by way of still another non-limiting example, be less than ten percent of the maximum degree of opening or of the maximum valve position. These decrements refer to the maximum degree of opening or to the maximum valve position as collected at the start of the hydronic balancing.

Advantageously, the controller 15 decrements the limit position of the at least one selected valve 7 - 9. In so doing, the controller 15 can look up maximum degrees of opening and/or maximum valve positions in the lookup table. The controller 15 can also decrement limit degrees of opening and/or limit positions and store decremented values in the lookup table. The controller 15 advantageously decrements the limit degrees of opening and/or the limit positions by a predetermined amount. The decrement is preferably the same for all the valves 7 - 9 of the system.

It is envisaged that the limit degree of opening will no longer be reduced if an actual opening degree is less than a threshold value. It is envisaged that the limit position will no longer be reduced if an actual position of the valve 7 - 9 is less than a threshold value. In an embodiment, the controller 15 no longer reduces the limit degree of opening when an actual degree of opening is less than the threshold value. Likewise, the controller 15 no longer reduces the limit position when an actual position is less than the threshold value. The threshold value can, by way of non-limiting example, be less than seventy percent of the maximum degree of opening. The threshold value can, by way of another non-limiting example, be sixty percent of the maximum degree of opening. The threshold value can, by way of still another non-limiting example, be greater than fifty percent of the maximum degree of opening.

It is also envisaged that an actual degree of opening is compared to a sum of the decrement and the threshold value. If the actual degree of opening is less than the sum, the limit degree of opening will no longer be reduced. In an embodiment, the controller 15 no longer reduces the limit degree of opening when an actual degree of opening is lower than this sum. It is also envisaged that the controller 15 no longer reduces the limit position when an actual position of the valve 7 - 9 is lower than this sum. The threshold value can, by way of non-limiting example, be less than seventy percent of the maximum degree of opening. The threshold value can, by way of another non-limiting example, be sixty percent of the maximum degree of opening. The threshold value can, by way of still another non-limiting example, be greater than fifty percent of the maximum degree of opening.

In an embodiment, the controller 15 produces an indication of an overpressure caused by the pump 2 when the reduction of the limit degree of opening stops. In a special embodiment, the controller 15 produces an indication of an overpressure caused by the distribution pump 2 when the reduction of the limit degree of opening stops. To that end, the controller 15 produces an error signal indicative of the overpressure. In the special embodiment, the controller 15 produces an error signal indicative of the overpressure caused by the distribution pump 2. The controller 15 can transmit the error signal to another entity such as a mobile handheld device and/or a tablet computer and/or a superordinate controller.

A wireless interface preferably affords communication between the controller 15 and the mobile handheld device and/or the tablet computer and/or the superordinate controller. The wireless interface can, by way of non-limiting examples, rely on wireless solutions such as EnOcean^{®} and/or KNX^{®} RF and/or Thread and/or WLAN and/or Zigbee. Communication via the wireless interface preferably involves a digital communication bus. Communication via the wireless interface preferably involves a digital communication protocol.

A hardwired interface can also afford communication between the controller 15 and the superordinate controller. The hardwired interface can, by way of non-limiting examples, use hardwired connections such as Ethernet^{®} cables and/or KNX^{®} cables. Communication via the hardwired interface preferably involves a digital communication bus. Communication via the hardwired interface preferably involves a digital communication protocol.

At least one entity selected from
- the controller 15,
- the mobile handheld device,
- the tablet computer,
- the superordinate controller can comprise a human-machine interface. The human-machine interface according to this disclosure preferably comprises a display with a suitable resolution. Suitable resolutions include, but are not limited to 426 x 320 pixels, 470 x 320 pixels, 640 x 480 pixels, 960 x 720 pixels. In preferred embodiments, the human-machine interface of this disclosure comprises a monochrome display or a colour display. The display can be a liquid-crystal display. The display can also comprise organic light- emitting diodes. The human-machine interface preferably also provides input devices such as, by way of non-limiting examples, keyboards, buttons, touchscreens, capacitive touchscreens, voice recognition, track points etc.

The at least one entity responds to the error signal and produces a message signal. The human-readable error message is transmitted to the human-machine interface. The human-machine interface receives the message signal, derives a human-readable message from the message signal and displays the human-readable message to an operator and/or to a user. The at least one entity can also alert the operator and/or the user upon receipt of the error signal. The alert can, by way of non-limiting example, involve an audible beep and/or an audible alarm. The human-machine interface can also alert the operator and/or the user upon receipt of the message signal. The alert can, by way of non-limiting examples, involve an audible beep and/or an audible alarm.

The controller 15 can still transmit the error signal to the pump 2. In the special embodiment, the controller transmits the error signal to the distribution pump 2. A wireless interface preferably affords communication between the controller 15 and the pump 2. In the special embodiment, a wireless interface can afford communication between the controller 15 and the distribution pump 2. The wireless interface can, by way of non-limiting examples, rely on wireless solutions such as EnOcean^{®} and/or KNX^{®} RF and/or Thread and/or WLAN and/or Zigbee. Communication via the wireless interface preferably involves a digital communication bus. Communication via the wireless interface preferably involves a digital communication protocol.

A hardwired interface can also afford communication between the controller 15 and the pump 2. In the special embodiment, a hardwired interface can afford communication between the controller 15 and the distribution pump **2.** The hardwired interface can, by way of non-limiting examples, use hardwired connections such as Ethernet^{®} cables and/or KNX^{®} cables. Communication via the hardwired interface preferably involves a digital communication bus. Communication via the hardwired interface preferably involves a digital communication protocol.

The pump 2 upon receipt of the error signal advantageously responds to the error signal by lowering pressure. In the special embodiment, the distribution pump 2 receives the error signal and responds to the error signal by lowering pressure.

Where at least one valve 7 - 9 is selected based on a mean value, the maximum degrees of opening and/or the limit positions will be decremented accordingly.

Where at least one limit position has been decremented, the selection of at least one valve 7 - 9 with the lowest opening degree will start all over again. The limit positions of the newly selected one or more valves 7 - 9 are then decremented again. It is envisaged that this optimisation of valve positions continues endlessly.

According to an aspect of this disclosure, at least one valve 7 - 9 has got a lower limit position and an upper limit position. The decremented limit positions are then upper limit positions. Similarly, all the valves 7 - 9 can have lower limit positions and upper limit positions. The decremented limit positions are then upper limit positions.

According to an aspect of this disclosure, at least one valve 7 - 9 has a lower limit degree of opening and an upper limit degree of opening. The decremented limit degrees of opening are then upper limits of the degrees of opening. Similarly, all the valves 7 - 9 can have lower limits of the degrees of opening and upper limits of the degrees of opening. The decremented limit degrees of opening are then upper limits of the degrees of opening.

In the event of an undersupply of thermal energy, minimum valve positions are collected for the valves 7 - 9 of the system. It is envisaged that the controller 15 queries the valves 7 - 9 and receives signals indicative of minimum positions for each of the valves 7 - 9. The controller 15 preferably comprises a memory such as a non-volatile memory and stores minimum positions of the valves 7 - 9 in its memory. The controller 15 can, by way of non-limiting example, store minimum valve positions in a lookup table. Minimum positions of the valves 7 - 9 of the system can later be determined from the lookup table.

In a special embodiment, the controller 15 comprises an analog-to-digital converter. The analog-to-digital converter provides conversion of analog signals indicative of minimum positions into (digital) measures. The analog-to-digital converter can be an integral part of the controller 15. To achieve compactness, the analog-to-digital converter and the controller 15 can be arranged on the same system-on-a-chip.

In another special embodiment, the controller 15 comprises a sigma-delta converter. The sigma-delta converter provides conversion of analog signals indicative of minimum positions into (digital) measures. The sigma-delta converter can be an integral part of the controller 15. To achieve compactness, the sigma-delta converter and the controller 15 can be arranged on the same system-on-a-chip.

The controller 15 also reads valve positions and/or signals indicative of control output from the valves 7 - 9. The signals indicative of control output can, by way of non-limiting example, be signals indicative of an output of a proportional and integral controller. To that end, the valves 7 - 9 can comprise proportional and integral controllers to adjust their positions as a function of actual temperatures and set points.

The signals indicative of control output can, by way of another non-limiting example, be signals indicative of an output of a proportional and integral and derivative controller. The valves 7 - 9 can comprise proportional and integral and derivative controllers to adjust their positions as a function of actual temperatures and set points.

The controller 15 reads time series of valve positions and/or of signals indicative of control output. The controller 15 identifies a percentage of valves 7 - 9 with the greatest valve positions and/or with the greatest signals indicative of control output.

According to an aspect of the present disclosure, the controller 15 calculates an arithmetic mean of valve positions and/or of the signals indicating control output. The controller 15 preferably calculates a separate arithmetic mean for every valve 7 - 9 of the system. The controller 15 selects a percentage of the valves 7 - 9 with the greatest arithmetic mean. The percentage can, by way of non-limiting example, be at least five percent or ten percent or less than twenty percent. The controller 15 preferably selects at least one valve 7 - 9, wherein the selected valve 7 - 9 has the greatest arithmetic mean.

According to another aspect of the present disclosure, the controller 15 calculates a geometric mean of valve positions and/or of the signals indicating control output. The controller 15 preferably calculates a separate geometric mean for every valve 7 - 9 of the system. The controller 15 selects a percentage of the valves 7 - 9 with the greatest geometric mean. The percentage can, by way of non-limiting example, be at least five percent or ten percent or less than twenty percent. The controller 15 preferably selects at least one valve 7 - 9, wherein the selected valve 7 - 9 has the greatest geometric mean.

The controller 15 can still read states, wherein the states are indicative of the respective valve 7 - 9 being closed or being open. More specifically, the states can indicate that the respective valve 7 - 9 is fully closed or is fully open. The controller 15 can still further read control signals, wherein the control signals are indicative of the respective valve 7 - 9 being closed or being open. More specifically, the control signals can indicate that the respective valve 7 - 9 is fully closed or is fully open.

The controller 15 preferably reads time series of states and/or of control signals, wherein the control signals indicate that the respective valve 7 - 9 is closed or is open. More specifically, the control signals of the time series can indicate that the respective valve 7 - 9 is fully closed or is fully open.

In an embodiment, the controller 15 comprises a or the clock such as a or the clock based on complementary metal-oxide semiconductors. The controller 15 is in communication with each valve 7 - 9. The controller 15 reads signals from each valve 7 - 9, wherein the signals indicate that the respective valves 7 - 9 are closed or are open. Advantageously, the controller 15 periodically reads such signals. The controller 15 can, by way of non-limiting example, periodically receive signals indicative of each valve 7 - 9 being closed or open every fifteen minutes. The controller 15 can, by way of another non-limiting example, periodically receive signals indicative of each valve 7 - 9 being closed or open every ten minutes. The controller 15 can, by way of still another non-limiting example, periodically receive signals indicative of each valve 7 - 9 being closed or open every thirty minutes. The frequency of reading signals is advantageously the same for all valves 7 - 9.

The controller 15 can produce timestamps based on the signals indicative of each valve 7 - 9 being closed or being open. The controller 15 can also count the number of signals received, wherein each signal indicates that a valve 7 - 9 is closed or is open. The number of signals indicative of an open valve 7 - 9 is then multiplied with an interval. That way, a duration of each valve 7 - 9 being open is estimated and/or is determined. The interval can, by way of non-limiting examples, be ten minutes or fifteen minutes or thirty minutes. The interval is preferably commensurate with the periodic reception of signals from the valves 7 - 9. The interval more preferably matches the interval of the periodic reception of signals from the valves 7 - 9. The interval is ideally the same for all valves 7 - 9. In a special embodiment, the number of signals is multiplied with an interval to determine a daily duration of each valve 7 - 9 being open. The interval can, by way of non-limiting examples, be ten minutes or fifteen minutes or thirty minutes. The interval is preferably commensurate with the periodic reception of signals from the valves 7 - 9. The interval more preferably matches the interval of the periodic reception of signals from the valves 7 - 9. The interval is ideally the same for all valves 7 - 9.

The controller 15 eventually identifies and/or selects a percentage of valves 7 - 9 with the longest durations of being open. The percentage can, by way of non-limiting example, be at least five percent or ten percent or less than twenty percent. The controller 15 preferably selects at least one valve 7 - 9, wherein the selected valve 7 - 9 has the longest opening duration.

At least one position of the at least one selected valve 7 - 9 is then limited. More specifically, a limit position of the at least one selected valve 7 - 9 is incremented. The increment can, by way of non-limiting example, be at least two percent of the maximum degree of opening or of the maximum valve position. The increment can, by way of another non-limiting example, be five percent of the maximum degree of opening or five percent of the maximum valve position. The increment can, by way of still another non-limiting example, be less than ten percent of the maximum degree of opening or of the maximum valve position. These increments refer to the maximum degree of opening or to the maximum valve position as collected at the start of the hydronic balancing.

Advantageously, the controller 15 increments the limit position of the at least one selected valve 7 - 9. In so doing, the controller 15 can look up maximum degrees of opening and/or maximum valve positions in the lookup table. The controller 15 can also increment limit degrees of opening and/or limit positions and store incremented values in the lookup table. The controller 15 advantageously increments the limit degrees of opening and/or the limit positions by a predetermined amount. The increment is preferably the same for all the valves 7 - 9 of the system.

It is envisaged that the limit degree of opening will no longer increase if an actual opening degree is greater than a threshold value. It is also envisaged that the limit position will no longer increase if an actual position of the valve 7 - 9 is greater than a threshold value. In an embodiment, the controller 15 no longer increases the limit degree of opening when an actual degree of opening is greater than the threshold value.

Likewise, the controller 15 no longer increases the limit position when an actual position is greater than the threshold value. The threshold value can, by way of non-limiting example, be greater than thirty percent of the maximum degree of opening. The threshold value can, by way of another non-limiting example, be forty percent of the maximum degree of opening. The threshold value can, by way of still another non-limiting example, be less than fifty percent of the maximum degree of opening.

It is also envisaged that an actual degree of opening is compared to a sum of the increment and the threshold value. If the actual degree of opening is greater than the sum, the limit degree of opening will no longer increase. In an embodiment, the controller 15 no longer increases the limit degree of opening when an actual degree of opening is greater than this sum. It is also envisaged that the controller 15 no longer increases the limit position when an actual position of the valve 7 - 9 is greater than this sum. The threshold value can, by way of non-limiting example, be greater than thirty percent of the maximum degree of opening. The threshold value can, by way of another non-limiting example, be forty percent of the maximum degree of opening. The threshold value can, by way of still another non-limiting example, be less than fifty percent of the maximum degree of opening.

Where at least one valve 7 - 9 is selected based on a mean value, the limit degrees of opening and/or the limit positions will be incremented accordingly.

When at least one limit position has been incremented, the selection of at least one valve 7 - 9 with the lowest opening degree starts all over again. The limit positions of the newly selected one or more valves 7 - 9 are then incremented again. It is envisaged that this optimisation of valve positions continues endlessly.

According to an aspect of this disclosure, at least one valve 7 - 9 has got a lower limit position and an upper limit position. The incremented limit positions are then lower limit positions. Similarly, all the valves 7 - 9 can have lower limit positions and upper limit positions. The incremented limit positions are then lower limit positions.

According to an aspect of this disclosure, at least one valve 7 - 9 has a lower limit degree of opening and an upper limit degree of opening. The incremented limit degrees of opening are then lower limits of the degrees of opening. Similarly, all the valves 7 - 9 can have lower limits of the degrees of opening and upper limits of the degrees of opening. The incremented limit degrees of opening are then lower limits of the degrees of opening.

It is envisaged that the controller 15 provides control functionality for the valves 7 - 9. That is, the controller 15 provides proportional, integral and/or derivative (PID) control for the valves 7 - 9. To that end, the valves 7 - 9 send temperature measurements and/or valve positions to the controller 15. The controller 15 derives a control signal from the temperature measurements and provides the control signal to the valves 7 - 9 of the installation. Integration of control functionality into the controller 15 yields a system that is less prone to failure. What's more, the system will no longer fail as a whole due to a valve 7 - 9 with a faulted PI(D) controller. Integration of control functionality into the controller 15 also offers advantages in terms of cost, since the installation dispenses with separate controllers in each valve.

In an embodiment, the controller 15 of the instant disclosure can adjust the position of at least one valve 7 - 9 in accordance with a control output. The control output can be derived and/or determined and/or calculated by the controller 15 using proportional and/or integral and/or derivative control.

A wide range of communication busses and protocols exist that provides communication functions in between valves and control units. Typically, wireless solutions such as WLAN, KNX^{®} RF, and/or Enocean^{®} are employed. Hardwired solutions are also on the market. These frequently rely on Ethernet^{®} cables and/or KNX^{®} cables. The choice of any particular wireless or hardwired solution is also influenced by bandwidth requirements.

It is envisaged that the valves 7 - 9 may communicate with the controller 15 using various protocols. There are cases where the devices of an installation rely on a single protocol such as KNX^{®}, Modbus, LON or BACnet^{®}. In addition, a number of proprietary protocols exist.

The controller 15 comes with a memory and with a memory controller to record values such as time constants, proportional, integral, derivative parameters for control etc. The valves 7 - 9 preferably also comprise a local control unit, a memory and a memory controller. The memory may, by way of non-limiting example, be random access memory (RAM), flash memory, registers, a hard disk, a removable disk, or similar.

It is envisaged that the control device 15 and/or the valves 7 - 9 run an operating system. The operating system may, for instance, be an Android^{®} operating system, a Windows^{®} operating system, or a Linux^{®} operating system such as Meego^{®}. The operating system may be a system specifically tailored to embedded systems and/or to controllers of HVAC installations. The operating system may also be general-purpose.

As described in detail herein, the present disclosure deals with a method of control of an installation for heating and/or ventilation and/or air-conditioning, the installation comprising a supply (1) of thermal energy and at least two thermal energy exchangers (10 - 12) connected to a pump (2) which is operable to cause a flow through at least one of the exchangers (10 - 12), wherein the exchangers (10 - 12) each comprise an adjustable, electromechanical valve (7 - 9), wherein each of the valves (7 - 9) is operable to modulate flow through its exchanger (10 - 12) between an open position affording flow through its exchanger (10 - 12) and a closed position obturating flow through its exchanger (10 - 12), wherein the valves (7 - 9) and the pump (2) are in communication with a controller (15) such that the controller (15) is configured to adjust and to monitor degrees of opening of the valves (7 - 9) and to read operation signals from or to the pump (2), the method comprising the steps **of:**
the controller (15) reading a time series of the operation signals from or to the pump (2);
the controller (15) determining an operating duration of the pump (2) based on the time series of operation signals;
the controller (15) comparing the operating duration to a predetermined duration;
if the operating duration is greater than the predetermined duration:
   the controller (15) receiving at least one status signal indicative of a state of the valve (7 - 9) from each of the valves (7 - 9);
   the controller (15) selecting a valve (7 - 9) based on the status signals, wherein the status signals indicate that the selected valve (7 - 9) is adjusted to afford the greatest or the smallest flow among the valves (7 - 9);
   the controller (15) changing a limit degree of opening of the selected valve (7 - 9) either by decrementing or by incrementing; and
   the controller (15) applying the changed limit degree of opening to the selected valve (7 - 9) such that a degree of opening of the selected valve (7 - 9) can at most be adjusted until the degree of opening of the selected valve (7 - 9) reaches the changed limit degree of opening.

The instant disclosure also deals with any of the aforementioned methods, wherein the method comprises the steps **of:**
the controller (15) reading a time series of the operation signals from or to the pump (2), wherein each operation signal of the time series indicates that the pump (2) is in operation or is out of operation;
the controller counting a number of operation signals indicative of the pump (2) being in operation; and
the controller determining an operating duration of the pump (2) by multiplying a first predetermined interval of time with the number of operation signals indicative of the pump (2) being in operation.

The present disclosure still deals with any of the aforementioned methods, wherein the method comprises the steps of:
the controller (15) generating a degree of opening from each status signal indicative of a state of the valve (7 - 9);
the controller (15) comparing the valves (7 - 9) among one another in terms of their degrees of opening; and
the controller (15) selecting the valve (7 - 9) based on the comparison, wherein the selected valve (7 - 9) has the greatest degree of opening among the valves (7 - 9).

The present disclosure also deals with any of the aforementioned methods, wherein the method comprises the steps of:
the controller (15) generating a degree of opening from each status signal indicative of a state of the valve (7 - 9);
the controller (15) for each valve (7 - 9) using the generated degree of opening of the valve (7 - 9) and a characteristic of the valve (7 - 9) to determine a flow through the valve (7 - 9);
the controller (15) comparing the valves (7 - 9) among one another in terms of their flows; and
the controller (15) selecting the valve (7 - 9) based on the comparison, wherein the selected valve (7 - 9) has the greatest flow among the valves (7 - 9).

The present disclosure still deals with any of the aforementioned methods, wherein the method comprises the steps of:
the controller (15) generating a degree of opening from each status signal indicative of a state of the valve (7 - 9);
the controller (15) for each valve (7 - 9) using the generated degree of opening of the valve (7 - 9) and a characteristic of the valve (7 - 9) to determine a flow rate through the valve (7 - 9);
the controller (15) comparing the valves (7 - 9) among one another in terms of their flow rates; and
the controller (15) selecting the valve (7 - 9) based on the comparison, wherein the selected valve (7 - 9) has the greatest flow rate among the valves (7 - 9).

The instant disclosure still further deals with any of the aforementioned methods not involving a selection of a valve having the greatest degree of opening, wherein the method comprises the steps of:
the controller (15) generating a degree of opening from each status signal indicative of a state of the valve (7 - 9);
the controller (15) comparing the valves (7 - 9) among one another in terms of their degrees of opening; and
the controller (15) selecting the valve (7 - 9) based on the comparison, wherein the selected valve (7 - 9) has the smallest degree of opening among the valves (7 - 9).

The present disclosure also deals with any of the aforementioned methods, wherein the method comprises the steps of:
the controller (15) generating a degree of opening from each status signal indicative of a state of the valve (7 - 9);
the controller (15) for each valve (7 - 9) using the generated degree of opening of the valve (7 - 9) and a characteristic of the valve (7 - 9) to determine a flow through the valve (7 - 9);
the controller (15) comparing the valves (7 - 9) among one another in terms of their flows; and
the controller (15) selecting the valve (7 - 9) based on the comparison, wherein the selected valve (7 - 9) has the smallest flow among the valves (7 - 9).

The present disclosure still deals with any of the aforementioned methods, wherein the method comprises the steps of:
the controller (15) generating a degree of opening from each status signal indicative of a state of the valve (7 - 9);
the controller (15) for each valve (7 - 9) using the generated degree of opening of the valve (7 - 9) and a characteristic of the valve (7 - 9) to determine a flow rate through the valve (7 - 9);
the controller (15) comparing the valves (7 - 9) among one another in terms of their flow rates; and
the controller (15) selecting the valve (7 - 9) based on the comparison, wherein the selected valve (7 - 9) has the smallest flow rate among the valves (7 - 9).

This is where characteristics such as valve curves of the valves (7 - 9) are factored in. The valve curves describe relationships between degrees of opening and flow through the valves (7 - 9). For example, a linear valve curve describes a linear relationship between a degree of opening and flow. The valve curves can also describe relationships between degrees of opening and flow rates through the valves (7 - 9). For example, a linear valve curve can describe a linear relationship between a degree of opening and a flow rate. In an embodiment, a linear valve curve is a linear characteristic curve. More specifically, the linear valve curve of a valve (7 - 9) can be a linear characteristic curve of the valve (7 - 9).

Unlike the linear curve, a characteristic in the form of an equal-percentage curve describes an equal-percentage relationship between the position and flow. That is, a flow through a valve (7 - 9) increases exponentially as the valve (7 - 9) opens. Also, flow rate through a valve (7 - 9) can increase exponentially as the valve (7 - 9) opens. In an embodiment, an equal-percentage valve curve is an equal-percentage characteristic curve. More specifically, the equal-percentage valve curve of a valve (7 - 9) can be an equal-percentage characteristic curve of the valve (7 - 9).

The present disclosure yet further deals with any of the aforementioned methods not involving a selection of a valve having the smallest degree of opening, wherein the method comprises the steps of:
the controller (15) receiving a time series of status signals from each of the valves (7 - 9), each status signal being indicative of a state of the valve (7 - 9);
the controller (15) generating state measures from the status signals, wherein each state measure indicates that a valve (7 - 9) of the valves (7 - 9) is closed or is open;
the controller (15) counting for each valve (7 - 9) a number of state measures indicative of the valve (7 - 9) being open;
the controller (15) determining for each valve (7 - 9) an opening duration by multiplying a second predetermined interval of time with the number of state measures indicative of the valve (7 - 9) being open;
the controller (15) comparing the valves (7 - 9) among one another in terms of their opening durations; and
the controller (15) selecting the valve (7 - 9) based on the comparison, wherein the selected valve (7 - 9) has the greatest opening duration.

More specifically, the instant disclosure deals with any of the aforementioned methods not involving a selection of a valve having the smallest degree of opening, wherein the method comprises the steps of:
the controller (15) receiving a time series of status signals from each of the valves (7 - 9), each status signal being indicative of a state of the valve (7 - 9);
the controller (15) generating state measures from the status signals, wherein each state measure indicates that a valve (7 - 9) of the valves (7 - 9) is closed or is open to more than a predetermined degree of opening;
the controller (15) counting for each valve (7 - 9) a number of state measures indicative of the valve (7 - 9) being open to more than the predetermined degree of opening;
the controller (15) determining for each valve (7 - 9) an opening duration by multiplying a second predetermined interval of time with the number of state measures indicative of the valve (7 - 9) being open to more than the predetermined degree of opening;
the controller (15) comparing the valves (7 - 9) among one another in terms of their opening durations; and
the controller (15) selecting the valve (7 - 9) based on the comparison, wherein the selected valve (7 - 9) has the greatest opening duration.

The predetermined degree of opening can, by way of non-limiting examples, be more than eighty percent or ninety percent or less than ninety-five percent. The instant disclosure still further deals with any of the aforementioned methods not involving a selection of a valve having the greatest degree of opening, wherein the method comprises the steps **of:**
the controller (15) receiving a time series of status signals from each of the valves (7 - 9), each status signal being indicative of a state of the valve (7 - 9);
the controller (15) generating state measures from the status signals, wherein each state measure indicates that a valve (7 - 9) of the valves (7 - 9) is closed or is open;
the controller (15) counting for each valve (7 - 9) a number of state measures indicative of the valve (7 - 9) being open;
the controller (15) determining for each valve (7 - 9) an opening duration by multiplying a second predetermined interval of time with the number of state measures indicative of the valve (7 - 9) being open;
the controller (15) comparing the valves (7 - 9) among one another in terms of their opening durations; and
the controller (15) selecting the valve (7 - 9) based on the comparison, wherein the selected valve (7 - 9) has the shortest opening duration.

More specifically, the instant disclosure deals with any of the aforementioned methods not involving a selection of a valve having the greatest degree of opening, wherein the method comprises the steps of:
the controller (15) receiving a time series of status signals from each of the valves (7 - 9), each status signal being indicative of a state of the valve (7 - 9);
the controller (15) generating state measures from the status signals, wherein each state measure indicates that a valve (7 - 9) of the valves (7 - 9) is closed or is open to more than a predetermined degree of opening;
the controller (15) counting for each valve (7 - 9) a number of state measures indicative of the valve (7 - 9) being open to more than the predetermined degree of opening;
the controller (15) determining for each valve (7 - 9) an opening duration by multiplying a second predetermined interval of time with the number of state measures indicative of the valve (7 - 9) being open to more than a predetermined degree of opening;
the controller (15) comparing the valves (7 - 9) among one another in terms of their opening durations; and
the controller (15) selecting the valve (7 - 9) based on the comparison, wherein the selected valve (7 - 9) has the shortest opening duration.

The predetermined degree of opening can, by way of non-limiting examples, be more than eighty percent or ninety percent or less than ninety-five percent.

The present disclosure yet further deals with any of the aforementioned methods, wherein the method comprises the steps of:
the controller (15) querying the selected valve (7 - 9);
the controller (15) receiving the limit degree of opening from the selected valve (7 - 9) in response to the query;
the controller (15) changing the received limit degree of opening of the selected valve (7 - 9) either by decrementing or by incrementing; and
the controller (15) applying the changed and received limit degree of opening to the selected valve (7 - 9) such that a degree of opening of the selected valve (7 - 9) can at most be adjusted until it reaches the changed and received limit degree of opening.

The instant disclosure also deals with any of the aforementioned methods, wherein the method comprises the steps of:
the controller (15) querying the valves (7 - 9);
the controller (15) receiving a limit degree of opening from each valve (7 - 9) in response to the query;
the controller (15) changing the received limit degree of opening of the selected valve (7 - 9) either by decrementing or by incrementing; and
the controller (15) applying the changed and received limit degree of opening to the selected valve (7 - 9) such that a degree of opening of the selected valve (7 - 9) can at most be adjusted until it reaches the changed and received limit degree of opening.

The present disclosure also deals with an installation for heating and/or ventilation and/or air-conditioning, the installation comprising a controller (15), a pump (2), a supply (1) of thermal energy and at least two thermal energy exchangers (10 - 12) connected to the pump (2) which is operable to cause a flow through at least one of the exchangers (10 - 12), wherein the exchangers (10 - 12) each comprise an adjustable, electromechanical valve (7 - 9), wherein each of the valves (7 - 9) is operable to modulate flow through its exchanger (10 - 12) between an open position affording flow through its exchanger (10 - 12) and a closed position obturating flow through its exchanger (10 - 12), wherein the valves (7 - 9) and the pump (2) are in communication with the controller (15) such that the controller (15) is configured to adjust and to monitor degrees of opening of the valves (7 - 9) and is configured to read operation signals from or to the pump (2), the controller (15) being configured to:
read a time series of the operation signals from or to the pump (2);
determine an operating duration of the pump (2) based on the time series of operation signals;
compare the operating duration to a predetermined duration;
if the operating duration is greater than the predetermined duration:
   receive at least one status signal indicative of a state of the valve (7 - 9) from each of the valves (7 - 9);
   select a valve (7 - 9) based on the status signals, wherein the status signals indicate that the selected valve (7 - 9) is adjusted to afford the greatest or the smallest flow among the valves (7 - 9);
   change the limit degree of opening of the selected valve (7 - 9) either by decrementing or by incrementing; and
   apply the changed limit degree of opening to the selected valve (7 - 9) such that a degree of opening of the selected valve (7 - 9) can at most be adjusted until the degree of opening of the selected valve (7 - 9) reaches the changed limit degree of opening.

The controller (15) of any of the aforementioned installations or methods preferably is a central controller (15). A central controller (15) requires significant computational resources mainly at the location of the central controller (15).

The present disclosure also pertains to any of the aforementioned installations or methods, wherein the pump (2) comprises a distribution pump (2). The present disclosure still pertains to any of the aforementioned installations or methods, wherein the pump (2) is a distribution pump (2). Ideally, the pump (2) and/or the distribution pump (2) are each operable to cause a flow of a medium through all thermal energy exchangers (10 - 12).

The instant disclosure also pertains to any of the aforementioned installations or methods, wherein the pump (2) comprises a distribution pump (2), and wherein the thermal energy exchangers (10 - 12) each comprise an adjustable, electromechanical valve (7 - 9) in the form of a control valve. The present disclosure still pertains to any of the aforementioned installations or methods, wherein the pump (2) is a distribution pump (2), and wherein the thermal energy exchangers (10 - 12) each comprise an adjustable, electromechanical valve (7 - 9) in the form of a control valve. The instant disclosure still further pertains to any of the aforementioned installations or methods, wherein the pump (2) comprises a distribution pump (2), wherein the thermal energy exchangers (10 - 12) each comprise an adjustable, electromechanical valve (7 - 9) in the form of a control valve, and wherein the controller (15) comprises a central controller (15). The instant disclosure yet further pertains to any of the aforementioned installations or methods, wherein the pump (2) is a distribution pump (2), wherein the thermal energy exchangers (10 - 12) each comprise an adjustable, electromechanical valve (7 - 9) in the form of a control valve, and wherein the controller (15) is a central controller (15).

The present disclosure also pertains to any of the aforementioned installations or methods, wherein the controller (15) is configured to: read a time series of the operation signals from or to the pump (2), wherein each operation signal of the time series indicates that the pump (2) is in operation or is out of operation. In other words, each operation signal of the time series indicates that the pump (2) causes a flow through at least one of the exchangers (10 - 12) or indicates that the pump (2) causes zero flow. The present disclosure still pertains to any of the aforementioned installations or methods, wherein the controller (15) is configured to: read a time series of the operation signals from the distribution pump (2), wherein each signal of the time series indicates that the distribution pump (2) is in operation or is out of operation. In other words, each of these operation signals indicates that the distribution pump (2) causes a flow through at least one of the exchangers (10 - 12) or indicates that the distribution pump (2) causes zero flow. Ideally, any operation signal of the aforementioned operation signals is an on/off signal.

The present disclosure also deals with any of the forementioned installations, wherein the controller (15) is configured to:
change the limit degree of opening of the selected valve (7 - 9) either by decrementing the limit degree of opening where the selected valve (7 - 9) is adjusted to afford the greatest flow among the valves (7 - 9) or by incrementing where the selected valve (7 - 9) is adjusted to afford the smallest flow among the valves (7 - 9).

The instant disclosure also deals with any of the forementioned installations, wherein the controller (15) is configured to: apply the changed limit degree of opening to the selected valve (7 - 9) such that a degree of opening of the selected valve (7 - 9) can at most be adjusted by the controller (15) until it reaches the changed limit degree of opening.

The present disclosure also deals with any of the aforementioned installations or methods, wherein the supply (1) is in fluid communication with the pump (2) and with the exchangers (10 - 12). The supply (1) ideally is in fluid communication with the distribution pump (2) and with the thermal energy exchangers (10 - 12).

The present disclosure also deals with any of the aforementioned installations, wherein the controller (15) is configured to:
map an initial regulating range for the selected valve (7 - 9) onto a newly defined regulating range for the selected valve (7 - 9), wherein the newly defined regulating range for the selected valve (7 - 9) is limited to the changed limit degree of opening.

According to this aspect of the present disclosure, the controller (15) is at first operable to adjust the degree of opening of the selected valve (7 - 9) within the initial regulating range. It is envisaged that the controller (15) is configured to:
define a new regulating range for the selected valve (7 - 9) such that the new regulating range for the selected valve (7 - 9) is limited by the changed limit degree of opening; and
map the initial regulating range for the selected valve (7 - 9) onto the newly defined regulating range for the selected valve (7 - 9).

Accordingly, the controller (15) can receive input signals and then use these signals to adjust the selected valve (7 - 9) before and after the limitation of the degree of opening. An input signal indicative of maximum closing or of maximum opening can, after the limitation of the degree of opening, result in a different degree of opening. This centralised approach affords backward compatibility with legacy ranges of input signals.

The controller (15) preferably has a memory storing the initial regulating range for the selected valve (7 - 9). The controller (15) ideally has a memory storing the initial regulating range for the selected valve (7 - 9) and/or the newly defined regulating range for the selected valve (7 - 9).

The instant disclosure also deals with any of the aforementioned installations, wherein the controller (15) is configured to:
generate a limitation signal indicative of the changed limit degree of opening;
transmit the limitation signal to the selected valve (7 - 9);
wherein the selected valve (7 - 9) is configured to:
   receive the limitation signal;
   process the limitation signal to obtain the changed limit degree of opening; and
   map an initial regulating range of the selected valve (7 - 9) onto a newly defined regulating range of the selected valve (7 - 9), wherein the newly defined regulating range of the selected valve (7 - 9) is limited to the changed limit degree of opening.

According to this aspect of the present disclosure, the selected valve (7 - 9) is at first operable to adjust its degree of opening within the initial regulating range. It is envisaged that the selected valve (7 - 9) comprises a local control unit, wherein the local control unit is configured to:
define a new regulating range of the selected valve (7 - 9) such that the new regulating range of the selected valve (7 - 9) is limited by the changed limit degree of opening; and
map the initial regulating range of the selected valve (7 - 9) onto the newly defined regulating range of the selected valve (7 - 9).

Accordingly, the selected valve (7 - 9) can receive input signals and then use these signals to adjust its degree of opening before and after the limitation of the degree of opening. An input signal indicative of maximum closing or of maximum opening can, after the limitation of the degree of opening, result in a different degree of opening. This decentralised approach affords backward compatibility with legacy ranges of input signals. A decentralised approach typically results in short response times.

The present disclosure still deals with any of the aforementioned installations, wherein the controller (15) is configured to:
read a time series of the operation signals from or to the pump (2), wherein each operation signal of the time series indicates that the pump (2) is in operation or is out of operation;
count a number of operation signals indicative of the pump (2) being in operation; and
determine an operating duration of the pump (2) by multiplying a first predetermined interval of time with the number of operation signals indicative of the pump (2) being in operation.

According to this aspect of the present disclosure, the controller (15) comprises an arithmetic logic unit. The present disclosure also pertains to any of the aforementioned installations or methods, wherein the controller (15) comprises an arithmetic logic unit and is configured to:
use its arithmetic logic unit to calculate an operating duration of the pump (2) by multiplying a first predetermined interval of time with the number of operation signals indicative of the pump (2) being in operation.

The instant disclosure also pertains to any of the aforementioned installations or methods, wherein the controller (15) is a central controller and is configured to:
read the time series of the operation signals from the distribution pump (2), wherein each operation signal of the time series indicates that the distribution pump (2) is in operation or is out of operation;
count the number of operation signals indicative of the distribution pump (2) being in operation; and
determine the operating duration of the distribution pump (2) by multiplying a first predetermined interval of time with the number of operation signals indicative of the distribution pump (2) being in operation.

According to this aspect of the present disclosure, the controller (15) is a central controller and comprises an arithmetic logic unit. The present disclosure also pertains to any of the aforementioned installations or methods, wherein the controller (15) is a central controller and comprises an arithmetic logic unit and is configured to:
use its arithmetic logic unit to calculate the operating duration of the distribution pump (2) by multiplying a first predetermined interval of time with the number of operation signals indicative of the distribution pump (2) being in operation.

According to an aspect of the aforementioned installations or methods, the controller (15) is a central controller and comprises an arithmetic logic unit. The present disclosure also pertains to any of the aforementioned installations or methods, wherein the controller (15) comprises an arithmetic logic unit and is configured to:
use its arithmetic logic unit to compare the operating duration to the predetermined duration.

It is envisaged that the controller (15) comprises a memory storing the first predetermined interval. It is still envisaged that the controller (15) comprises a memory storing the first predetermined interval and the predetermined duration. It is still further envisaged that the controller (15) is a central controller and comprises a memory storing the first predetermined interval. It is yet further envisaged that the controller (15) is a central controller and comprises a memory storing the first predetermined interval and the predetermined duration.

The present disclosure also deals with any of the aforementioned methods or installations, wherein the first predetermined interval of time equals the second predetermined interval of time. This mitigates complexity since the pump (2) and the valves (7 - 9) are queried at the same frequency. In an alternate embodiment, the first predetermined interval of time is different from the second predetermined interval of time. This approach is more nuanced since it allows the pump (2) and the valve (7 - 9) to be queried at different frequencies.

The instant disclosure still deals with any of the aforementioned methods or installations, wherein the controller (15) comprises an arithmetic logic unit and uses its arithmetic logic unit to calculate for each valve (7 - 9) an opening duration by multiplying a second predetermined interval of time with the number of state measures indicative of the valve (7 - 9) being open.

The present disclosure also deals with any of the aforementioned installations, wherein the controller (15) is configured to:
generate a degree of opening from each status signal indicative of a state of the valve (7 - 9);
compare the valves (7 - 9) among one another in terms of their degrees of opening; and
select the valve (7 - 9) based on the comparison, wherein the selected valve (7 - 9) has the greatest degree of opening among the valves (7 - 9).

According to an aspect of the aforementioned installations or methods, each status signal indicative of a state of the valve (7 - 9) is indicative of a flow or of a flow rate. Preferably, each status signal indicative of a state of the valve (7 - 9) is indicative of a flow through the respective valve (7 - 9). Ideally, each status signal indicative of a state of the valve (7 - 9) is indicative of a flow rate through the respective valve (7 - 9). According to another aspect of the aforementioned installations or methods, each status signal indicative of a state of the valve (7 - 9) is indicative of a degree of opening. Preferably, each status signal indicative of a state of the valve (7 - 9) is indicative of a degree of opening of the respective valve (7 - 9). According to still another aspect of the aforementioned installations or methods, each state measure is a binary state measure indicating that a valve (7 - 9) of the valves (7 - 9) is closed or is open. Ideally, the controller (15) is configured to generate a state measure from each of the status signals, wherein each state measure indicates that a valve (7 - 9) of the valves (7 - 9) is closed or is open.

The instant disclosure also deals with any of the aforementioned installations or methods, wherein the controller (15) is configured to:
query the selected valve (7 - 9);
receive the limit degree of opening from the selected valve (7 - 9) in response to the query;
decrement or increment the received limit degree of opening; and
where the controller (15) has decremented the received limit degree of opening:
   apply the decremented limit degree of opening to the selected valve (7 - 9) such that the selected valve (7 - 9) can at most open to the decremented limit degree of opening.

The present disclosure deals with any of the aforementioned installations or methods, wherein the controller (15) is configured to:
query the selected valve (7 - 9);
receive the limit degree of opening from the selected valve (7 - 9) in response to the query;
decrement or increment the received limit degree of opening; and
where the controller (15) has incremented the received limit degree of opening:
   apply the incremented limit degree of opening to the selected valve (7 - 9) such that the selected valve (7 - 9) can at most close to the incremented limit degree of opening.

The instant disclosure deals with any of the aforementioned installations or methods, wherein the controller (15) is configured to:
query the selected valve (7 - 9);
receive a limit position from the selected valve (7 - 9) in response to the query;
decrement or increment the received limit position; and
where the controller (15) has decremented the received limit position:
   apply the decremented limit position to the selected valve (7 - 9) such that the selected valve (7 - 9) can at most open to the decremented limit position.

The present disclosure yet further deals with any of the aforementioned installations or methods, wherein the controller (15) is configured to:
query the selected valve (7 - 9);
receive a limit position from the selected valve (7 - 9) in response to the query;
decrement or increment the received limit position; and
where the controller (15) has incremented the received limit position:
   apply the incremented limit position to the selected valve (7 - 9) such that the selected valve (7 - 9) can at most close to the incremented limit position.

The instant disclosure also deals with any of the aforementioned installations or methods, wherein the controller (15) is configured to:
query the valves (7 - 9);
receive a limit degree of opening from each valve (7 - 9) in response to the query;
decrement or increment the received limit degree of opening of the selected valve (7 - 9); and
where the controller (15) has decremented the received limit degree of opening of the selected valve (7 - 9):
   apply the decremented limit degree of opening to the selected valve (7 - 9) such that the selected valve (7 - 9) can at most open to the decremented limit degree of opening.

The present disclosure still deals with any of the aforementioned installations or methods, the controller (15) being configured to:
query the valves (7 - 9);
receive a limit degree of opening from each valve (7 - 9) in response to the query;
decrement or increment the received limit degree of opening of the selected valve (7 - 9); and
where the controller (15) has incremented the received limit degree of opening of the selected valve (7 - 9):
   apply the incremented limit degree of opening to the selected valve (7 - 9) such that the selected valve (7 - 9) can at most close to the incremented limit degree of opening.

The instant disclosure deals with any of the aforementioned installations or methods, wherein the controller (15) is configured to:
query the valves (7 - 9);
receive a limit position from each valve (7 - 9) in response to the query;
decrement or increment the received limit position of the selected valve (7 - 9); and
where the controller (15) has decremented the received limit position of the selected valve (7 - 9):
   apply the decremented limit position to the selected valve (7 - 9) such that the selected valve (7 - 9) can at most open to the decremented limit position.

The present disclosure deals with any of the aforementioned installations or methods, wherein the controller (15) is configured to:
query the valves (7 - 9);
receive a limit position from each valve (7 - 9) in response to the query;
decrement or increment the received limit position of the selected valve (7 - 9); and
where the controller (15) has incremented the received limit position of the selected valve (7 - 9):
   apply the incremented limit position to the selected valve (7 - 9) such that the selected valve (7 - 9) can at most close to the incremented limit position.

The present disclosure also deals with any of the aforementioned installations or methods, wherein the controller (15) is configured to query the valves (7 - 9) prior to determining the operating duration of the pump (2). It is still envisaged that the controller (15) is configured to query all valves (7 - 9). It is still envisaged that the controller (15) is configured to query all valves (7 - 9) prior to determining the operating duration of the pump (2).

The instant disclosure also deals with any of the aforementioned installations or methods, wherein the controller (15) is configured to:
after the application of the changed limit degree of opening:
read another time series of the operation signals from or to the pump (2);
determine another operating duration of the pump (2) based on the other time series of operation signals;
compare the other determined duration to the predetermined duration;
if the other determined duration is greater than the predetermined duration:
   receive at least another status signal indicative of a state of the valve (7 - 9) from each of the valves (7 - 9);
   select another valve (7 - 9) based on the other status signals, wherein the other status signals indicate that the selected other valve (7 - 9) is adjusted to afford the greatest or the smallest flow among the valves (7 - 9);
   change another limit degree of opening of the selected other valve (7 - 9) either by decrementing or by incrementing; and
   apply the changed other limit degree of opening to the selected other valve (7 - 9) such that a degree of opening of the selected other valve (7 - 9) can at most be adjusted until it reaches the changed other limit degree of opening.

It is envisaged that any of the aforementioned limit positions is an end position and that any of the aforementioned limit degrees of opening is an end degree of opening. It is still envisaged that any of the aforementioned degrees of opening is a percentage of opening. Likewise, any of the aforementioned limit degrees of opening can be a limit percentage of opening. It is still further envisaged that any of the aforementioned degrees of opening is a percentage of valve opening. Likewise, any of the aforementioned limit degrees of opening can be a limit percentage of valve opening.

The present disclosure also deals with a computer program comprising instructions to cause the controller (15) any of the aforementioned installations to execute the steps of any of the aforementioned methods.

The instant disclosure also deals with a computer-readable non-transitory medium having stored thereon the aforementioned computer program.

Any steps of a method according to the present disclosure can be embodied in hardware and/or in a software module executed by a processor. Any steps of such a method can also be embodied in a software module executed by a processor inside a container using operating system level virtualisation. Any steps of such a method can still be embodied in a cloud computing arrangement. It is envisaged that any steps of a method according to the present disclosure is implemented in a combination of the above embodiments. The software may include a firmware and/or a hardware driver run by the operating system and/or an application program. Thus, the disclosure also relates to a non-transitory computer program product for performing the operations presented herein. If implemented in software, the functions described may be stored as one or more instructions on a computer-readable and non-transitory medium. Storage media that can be used include, by way of non-limiting examples, random access memory (RAM) and/or read only memory (ROM) and/or flash memory. Storage media can, by way of non-limiting examples, also include EPROM memory and/or EEPROM memory and/or registers and/or a hard disk and/or a removable disk. Further storage media can, by way of non-limiting examples, include other optical disks and/or any available media that can be accessed by a computer. Storage media can still, by way of non-limiting example, include any other IT equipment and appliance.

It should be understood that the foregoing relates only to certain embodiments of the disclosure. Numerous changes may be made therein without departing from the scope of the disclosure as defined by the following claims. It should also be understood that the disclosure is not restricted to the illustrated embodiments. Various modifications can be made within the scope of the following claims.

### Reference numerals

1 supply of thermal energy
2 (electric) pump
3 circuit
4, 5, 6 loops
7 - 9 (electromechanical) valves
10, 11, 12 heat exchangers or groups of heat exchangers
13, 14 branches
15 (central) controller

## Claims

1. A method of control of an installation for heating and/or ventilation and/or air-conditioning, the installation comprising a supply (1) of thermal energy and at least two thermal energy exchangers (10 - 12) connected to a pump (2) which is operable to cause a flow through at least one of the exchangers (10 - 12), wherein the exchangers (10 - 12) each comprise an adjustable, electromechanical valve (7 - 9), wherein each of the valves (7 - 9) is operable to modulate flow through its exchanger (10 - 12) between an open position affording flow through its exchanger (10 - 12) and a closed position obturating flow through its exchanger (10 - 12), wherein the valves (7 - 9) and the pump (2) are in communication with a controller (15) such that the controller (15) is configured to adjust and to monitor degrees of opening of the valves (7 - 9) and/or percentages of opening of the valves (7 - 9) and to read operation signals from or to the pump (2), **characterized in that** the method comprising the steps of:
the controller (15) reading a time series of the operation signals from or to the pump (2);
the controller (15) determining an operating duration of the pump (2) based on the time series of operation signals;
the controller (15) comparing the operating duration to a predetermined duration;
if the operating duration is greater than the predetermined duration:
the controller (15) receiving at least one status signal indicative of a state of the valve (7 - 9) from each of the valves (7 - 9);
the controller (15) selecting a valve (7 - 9) based on the status signals, wherein the status signals indicate that the selected valve (7 - 9) is adjusted to afford the greatest or the smallest flow among the valves (7 - 9);
the controller (15) changing a limit degree of opening of the selected valve (7 - 9) either by decrementing or by incrementing; and
the controller (15) applying the changed limit degree of opening to the selected valve (7 - 9) such that a degree of opening of the selected valve (7 - 9) can at most be adjusted until the degree of opening of the selected valve (7 - 9) reaches the changed limit degree of opening.

2. The method according to claim 1, wherein the method comprises the steps of:
the controller (15) reading a time series of the operation signals from or to the pump (2), wherein each operation signal of the time series indicates that the pump (2) is in operation or is out of operation;
the controller counting a number of operation signals indicative of the pump (2) being in operation; and
the controller determining an operating duration of the pump (2) by multiplying a first predetermined interval of time with the number of operation signals indicative of the pump (2) being in operation.

3. The method according to any of the claims 1 to 2, wherein the method comprises the steps of:
the controller (15) generating a degree of opening from each status signal indicative of a state of the valve (7 - 9);
the controller (15) for each valve (7 - 9) using the generated degree of opening of the valve (7 - 9) and a characteristic of the valve (7 - 9) to determine a flow through the valve (7 - 9);
the controller (15) comparing the valves (7 - 9) among one another in terms of their flows; and
the controller (15) selecting the valve (7 - 9) based on the comparison, wherein the selected valve (7 - 9) has the greatest flow among the valves (7 - 9).

4. The method according to any of the claims 1 to 2, wherein the method comprises the steps of:
the controller (15) generating a degree of opening from each status signal indicative of a state of the valve (7 - 9);
the controller (15) for each valve (7 - 9) using the generated degree of opening of the valve (7 - 9) and a characteristic of the valve (7 - 9) to determine a flow through the valve (7 - 9);
the controller (15) comparing the valves (7 - 9) among one another in terms of their flows; and
the controller (15) selecting the valve (7 - 9) based on the comparison, wherein the selected valve (7 - 9) has the smallest flow among the valves (7 - 9).

5. The method according to any of the claims 1 to 2, wherein the method comprises the steps of:
the controller (15) receiving a time series of status signals from each of the valves (7 - 9), each status signal being indicative of a state of the valve (7 - 9);
the controller (15) generating state measures from the status signals, wherein each state measure indicates that a valve (7 - 9) of the valves (7 - 9) is closed or is open;
the controller (15) counting for each valve (7 - 9) a number of state measures indicative of the valve (7 - 9) being open;
the controller (15) determining for each valve (7 - 9) an opening duration by multiplying a second predetermined interval of time with the number of state measures indicative of the valve (7 - 9) being open;
the controller (15) comparing the valves (7 - 9) among one another in terms of their opening durations; and
the controller (15) selecting the valve (7 - 9) based on the comparison, wherein the selected valve (7 - 9) has the greatest opening duration.

6. The method according to any of the claims 1 to 2, wherein the method comprises the steps of:
the controller (15) receiving a time series of status signals from each of the valves (7 - 9), each status signal being indicative of a state of the valve (7 - 9);
the controller (15) generating state measures from the status signals, wherein each state measure indicates that a valve (7 - 9) of the valves (7 - 9) is closed or is open;
the controller (15) counting for each valve (7 - 9) a number of state measures indicative of the valve (7 - 9) being open;
the controller (15) determining for each valve (7 - 9) an opening duration by multiplying a second predetermined interval of time with the number of state measures indicative of the valve (7 - 9) being open;
the controller (15) comparing the valves (7 - 9) among one another in terms of their opening durations; and
the controller (15) selecting the valve (7 - 9) based on the comparison, wherein the selected valve (7 - 9) has the shortest opening duration.

7. The method according to any of the claims 1 to 6, wherein the method comprises the steps of:
the controller (15) querying the selected valve (7 - 9);
the controller (15) receiving the limit degree of opening from the selected valve (7 - 9) in response to the query;
the controller (15) changing the received limit degree of opening of the selected valve (7 - 9) either by decrementing or by incrementing; and
the controller (15) applying the changed and received limit degree of opening to the selected valve (7 - 9) such that a degree of opening of the selected valve (7 - 9) can at most be adjusted until it reaches the changed and received limit degree of opening.

8. The method according to any of the claims 1 to 7, wherein the method comprises the steps of:
the controller (15) querying the valves (7 - 9);
the controller (15) receiving a limit degree of opening from each valve (7 - 9) in response to the query;
the controller (15) changing the received limit degree of opening of the selected valve (7 - 9) either by decrementing or by incrementing; and
the controller (15) applying the changed and received limit degree of opening to the selected valve (7 - 9) such that a degree of opening of the selected valve (7 - 9) can at most be adjusted until it reaches the changed and received limit degree of opening.

9. An installation for heating and/or ventilation and/or air-conditioning, the installation comprising a controller (15), a pump (2), a supply (1) of thermal energy and at least two thermal energy exchangers (10 - 12) connected to the pump (2) which is operable to cause a flow through at least one of the exchangers (10 - 12), wherein the exchangers (10 - 12) each comprise an adjustable, electromechanical valve (7 - 9), wherein each of the valves (7 - 9) is operable to modulate flow through its exchanger (10 - 12) between an open position affording flow through its exchanger (10 - 12) and a closed position obturating flow through its exchanger (10 - 12), wherein the valves (7 - 9) and the pump (2) are in communication with the controller (15) such that the controller (15) is configured to adjust and to monitor degrees of opening of the valves (7 - 9) and is configured to read operation signals from or to the pump (2), the controller (15) being configured to:
read a time series of the operation signals from or to the pump (2);
determine an operating duration of the pump (2) based on the time series of operation signals;
compare the operating duration to a predetermined duration;
if the operating duration is greater than the predetermined duration:
receive at least one status signal indicative of a state of the valve (7 - 9) from each of the valves (7 - 9);
select a valve (7 - 9) based on the status signals, wherein the status signals indicate that the selected valve (7 - 9) is adjusted to afford the greatest or the smallest flow among the valves (7 - 9);
change the limit degree of opening of the selected valve (7 - 9) either by decrementing or by incrementing; and
apply the changed limit degree of opening to the selected valve (7 - 9) such that a degree of opening of the selected valve (7 - 9) can at most be adjusted until the degree of opening of the selected valve (7 - 9) reaches the changed limit degree of opening.

10. The installation according to claim 9, wherein the controller (15) is configured to:
map an initial regulating range for the selected valve (7 - 9) onto a newly defined regulating range for the selected valve (7 - 9), wherein the newly defined regulating range for the selected valve (7 - 9) is limited to the changed limit degree of opening.

11. The installation according to claim 9, wherein the controller (15) is configured to:
generate a limitation signal indicative of the changed limit degree of opening;
transmit the limitation signal to the selected valve (7 - 9);
wherein the selected valve (7 - 9) is configured to:
receive the limitation signal;
process the limitation signal to obtain the changed limit degree of opening; and
map an initial regulating range of the selected valve (7 - 9) onto a newly defined regulating range of the selected valve (7 - 9), wherein the newly defined regulating range of the selected valve (7 - 9) is limited to the changed limit degree of opening.

12. The installation according to any of the claims 9 to 11, wherein the controller (15) is configured to:
read a time series of the operation signals from or to the pump (2), wherein each operation signal of the time series indicates that the pump (2) is in operation or is out of operation;
count a number of operation signals indicative of the pump (2) being in operation; and
determine an operating duration of the pump (2) by multiplying a first predetermined interval of time with the number of operation signals indicative of the pump (2) being in operation.

13. The installation according to any of the claims 9 to 12, wherein the controller (15) is configured to:
generate a degree of opening from each status signal indicative of a state of the valve (7 - 9);
compare the valves (7 - 9) among one another in terms of their degrees of opening; and
select the valve (7 - 9) based on the comparison, wherein the selected valve (7 - 9) has the greatest degree of opening among the valves (7 - 9).

14. A computer program comprising instructions to cause the controller (15) of the installation according to any of the claims 9 to 13 to execute the steps of the method according to any of the claims 1 to 8.

15. A computer-readable non-transitory medium having stored thereon the computer program of claim 14.

## Patentansprüche

1. Verfahren zur Steuerung einer Anlage zur Heizung und/oder Lüftung und/oder Klimatisierung, wobei die Anlage eine Versorgung (1) mit Wärmeenergie und mindestens zwei Wärmeenergietauscher (10 - 12) umfasst, die mit einer Pumpe (2) verbunden sind, die betreibbar ist, um einen Durchfluss durch mindestens einen der Tauscher (10 - 12) zu bewirken, wobei die Tauscher (10 - 12) jeweils ein verstellbares, elektromechanisches Ventil (7 - 9) umfassen, wobei jedes der Ventile (7 - 9) betreibbar ist, um den Durchfluss durch seinen Tauscher (10 - 12) zwischen einer Offenstellung, die einen Durchfluss durch seinen Tauscher (10 - 12) ermöglicht, und einer Schließstellung, die den Durchfluss durch seinen Tauscher (10 - 12) absperrt, zu modulieren, wobei die Ventile (7 - 9) und die Pumpe (2) in Kommunikation mit einer Automatisierungseinheit (15) stehen, so dass die Automatisierungseinheit (15) konfiguriert ist, Öffnungsgrade der Ventile (7 - 9) und/oder Öffnungsprozentsätze der Ventile (7 - 9) einzustellen und zu überwachen und Betriebssignale von oder zu der Pumpe (2) zu lesen, **dadurch gekennzeichnet, dass** das Verfahren die folgenden Schritte umfasst:
Lesen, durch die Automatisierungseinheit (15), einer Zeitreihe der Betriebssignale von oder zu der Pumpe (2);
Bestimmen, durch die Automatisierungseinheit (15), einer Betriebsdauer der Pumpe (2) basierend auf der Zeitreihe von Betriebssignalen;
Vergleichen, durch die Automatisierungseinheit (15), der Betriebsdauer mit einer vorbestimmten Dauer;
wenn die Betriebsdauer größer als die vorbestimmte Dauer ist:
Empfangen, durch die Automatisierungseinheit (15), mindestens eines Statussignals, das einen Zustand des Ventils (7 - 9) anzeigt, von jedem der Ventile (7 - 9);
Auswählen, durch die Automatisierungseinheit (15), eines Ventils (7 - 9) basierend auf den Statussignalen, wobei die Statussignale anzeigen, dass das ausgewählte Ventil (7 - 9) eingestellt ist, um den größten oder den kleinsten Durchfluss unter den Ventilen (7 - 9) zu ermöglichen;
Ändern, durch die Automatisierungseinheit (15), eines Grenzöffnungsgrads des ausgewählten Ventils (7 - 9) entweder durch Dekrementieren oder durch Inkrementieren; und
Anwenden, durch die Automatisierungseinheit (15), des geänderten Grenzöffnungsgrads auf das ausgewählte Ventil (7 - 9), so dass ein Öffnungsgrad des ausgewählten Ventils (7 - 9) höchstens eingestellt werden kann, bis der Öffnungsgrad des ausgewählten Ventils (7 - 9) den geänderten Grenzöffnungsgrad erreicht.

2. Das Verfahren nach Anspruch 1, wobei das Verfahren die folgenden Schritte umfasst:
Lesen, durch die Automatisierungseinheit (15), einer Zeitreihe der Betriebssignale von oder zu der Pumpe (2), wobei jedes Betriebssignal der Zeitreihe anzeigt, dass die Pumpe (2) in Betrieb oder außer Betrieb ist;
Zählen, durch die Automatisierungseinheit (15), einer Anzahl von Betriebssignalen, die anzeigen, dass die Pumpe (2) in Betrieb ist; und
Bestimmen, durch die Automatisierungseinheit (15), einer Betriebsdauer der Pumpe (2) durch Multiplizieren eines ersten vorbestimmten Zeitintervalls mit der Anzahl von Betriebssignalen, die anzeigen, dass die Pumpe (2) in Betrieb ist.

3. Das Verfahren nach einem der Ansprüche 1 bis 2, wobei das Verfahren die folgenden Schritte umfasst:
Erzeugen, durch die Automatisierungseinheit (15), eines Öffnungsgrads aus jedem Statussignal, das einen Zustand des Ventils (7 - 9) anzeigt;
Verwenden, durch die Automatisierungseinheit (15), für jedes Ventil (7 - 9) des erzeugten Öffnungsgrads des Ventils (7 - 9) und einer Kennlinie des Ventils (7 - 9), um einen Durchfluss durch das Ventil (7 - 9) zu bestimmen;
Vergleichen, durch die Automatisierungseinheit (15), der Ventile (7 - 9) untereinander hinsichtlich ihrer Durchflüsse; und
Auswählen, durch die Automatisierungseinheit (15), des Ventils (7 - 9) basierend auf dem Vergleich, wobei das ausgewählte Ventil (7 - 9) den größten Durchfluss unter den Ventilen (7 - 9) aufweist.

4. Das Verfahren nach einem der Ansprüche 1 bis 2, wobei das Verfahren die folgenden Schritte umfasst:
Erzeugen, durch die Automatisierungseinheit (15), eines Öffnungsgrads aus jedem Statussignal, das einen Zustand des Ventils (7 - 9) anzeigt;
Verwenden, durch die Automatisierungseinheit (15), für jedes Ventil (7 - 9) des erzeugten Öffnungsgrads des Ventils (7 - 9) und einer Kennlinie des Ventils (7 - 9), um einen Durchfluss durch das Ventil (7 - 9) zu bestimmen;
Vergleichen, durch die Automatisierungseinheit (15), der Ventile (7 - 9) untereinander hinsichtlich ihrer Durchflüsse; und
Auswählen, durch die Automatisierungseinheit (15), des Ventils (7 - 9) basierend auf dem Vergleich, wobei das ausgewählte Ventil (7 - 9) den kleinsten Durchfluss unter den Ventilen (7 - 9) aufweist.

5. Das Verfahren nach einem der Ansprüche 1 bis 2, wobei das Verfahren die folgenden Schritte umfasst:
Empfangen, durch die Automatisierungseinheit (15), einer Zeitreihe von Statussignalen von jedem der Ventile (7 - 9), wobei jedes Statussignal einen Zustand des Ventils (7 - 9) anzeigt;
Erzeugen, durch die Automatisierungseinheit (15), von Zustandsmaßen aus den Statussignalen, wobei jedes Zustandsmaß anzeigt, dass ein Ventil (7 - 9) der Ventile (7 - 9) geschlossen oder offen ist;
Zählen, durch die Automatisierungseinheit (15), für jedes Ventil (7 - 9) einer Anzahl von Zustandsmaßen, die anzeigen, dass das Ventil (7 - 9) offen ist;
Bestimmen, durch die Automatisierungseinheit (15), für jedes Ventil (7 - 9) einer Öffnungsdauer durch Multiplizieren eines zweiten vorbestimmten Zeitintervalls mit der Anzahl von Zustandsmaßen, die anzeigen, dass das Ventil (7 - 9) offen ist;
Vergleichen, durch die Automatisierungseinheit (15), der Ventile (7 - 9) untereinander hinsichtlich ihrer Öffnungsdauern; und
Auswählen, durch die Automatisierungseinheit (15), des Ventils (7 - 9) basierend auf dem Vergleich, wobei das ausgewählte Ventil (7 - 9) die größte Öffnungsdauer aufweist.

6. Das Verfahren nach einem der Ansprüche 1 bis 2, wobei das Verfahren die folgenden Schritte umfasst:
Empfangen, durch die Automatisierungseinheit (15), einer Zeitreihe von Statussignalen von jedem der Ventile (7 - 9), wobei jedes Statussignal einen Zustand des Ventils (7 - 9) anzeigt;
Erzeugen, durch die Automatisierungseinheit (15), von Zustandsmaßen aus den Statussignalen, wobei jedes Zustandsmaß anzeigt, dass ein Ventil (7 - 9) der Ventile (7 - 9) geschlossen oder offen ist;
Zählen, durch die Automatisierungseinheit (15), für jedes Ventil (7 - 9) einer Anzahl von Zustandsmaßen, die anzeigen, dass das Ventil (7 - 9) offen ist;
Bestimmen, durch die Automatisierungseinheit (15), für jedes Ventil (7 - 9) einer Öffnungsdauer durch Multiplizieren eines zweiten vorbestimmten Zeitintervalls mit der Anzahl von Zustandsmaßen, die anzeigen, dass das Ventil (7 - 9) offen ist;
Vergleichen, durch die Automatisierungseinheit (15), der Ventile (7 - 9) untereinander hinsichtlich ihrer Öffnungsdauern; und
Auswählen, durch die Automatisierungseinheit (15), des Ventils (7 - 9) basierend auf dem Vergleich, wobei das ausgewählte Ventil (7 - 9) die kürzeste Öffnungsdauer aufweist.

7. Das Verfahren nach einem der Ansprüche 1 bis 6, wobei das Verfahren die folgenden Schritte umfasst:
Abfragen des ausgewählten Ventils (7 - 9) durch die Automatisierungseinheit (15);
Empfangen des Grenzöffnungsgrads von dem ausgewählten Ventil (7 - 9) durch die Automatisierungseinheit (15) als Reaktion auf die Abfrage;
Ändern des empfangenen Grenzöffnungsgrads des ausgewählten Ventils (7 - 9) durch die Automatisierungseinheit (15) entweder durch Dekrementieren oder durch Inkrementieren; und
Anwenden des geänderten und empfangenen Grenzöffnungsgrads auf das ausgewählte Ventil (7 - 9) durch die Automatisierungseinheit (15), so dass ein Öffnungsgrad des ausgewählten Ventils (7 - 9) höchstens eingestellt werden kann, bis er den geänderten und empfangenen Grenzöffnungsgrad erreicht.

8. Das Verfahren nach einem der Ansprüche 1 bis 7, wobei das Verfahren die Schritte umfasst:
Abfragen der Ventile (7 - 9) durch die Automatisierungseinheit (15);
Empfangen eines Grenzöffnungsgrads von jedem Ventil (7 - 9) durch die Automatisierungseinheit (15) als Reaktion auf die Abfrage;
Ändern des empfangenen Grenzöffnungsgrads des ausgewählten Ventils (7 - 9) durch die Automatisierungseinheit (15) entweder durch Dekrementieren oder durch Inkrementieren; und
Anwenden des geänderten und empfangenen Grenzöffnungsgrads auf das ausgewählte Ventil (7 - 9) durch die Automatisierungseinheit (15), so dass ein Öffnungsgrad des ausgewählten Ventils (7 - 9) höchstens eingestellt werden kann, bis er den geänderten und empfangenen Grenzöffnungsgrad erreicht.

9. Anlage zur Heizung und/oder Lüftung und/oder Klimatisierung, wobei die Anlage eine Automatisierungseinheit (15), eine Pumpe (2), eine Versorgung (1) mit Wärmeenergie und mindestens zwei mit der Pumpe (2) verbundene Wärmeenergietauscher (10 - 12) umfasst, wobei die Pumpe (2) betreibbar ist, um einen Durchfluss durch mindestens einen der Tauscher (10 - 12) zu bewirken, wobei die Tauscher (10 - 12) jeweils ein verstellbares, elektromechanisches Ventil (7 - 9) umfassen, wobei jedes der Ventile (7 - 9) betreibbar ist, um den Durchfluss durch seinen Tauscher (10 - 12) zwischen einer Offenstellung, die einen Durchfluss durch seinen Tauscher (10 - 12) ermöglicht, und einer Schließstellung, die den Durchfluss durch seinen Tauscher (10 - 12) absperrt, zu modulieren, wobei die Ventile (7 - 9) und die Pumpe (2) in Kommunikation mit der Automatisierungseinheit (15) stehen, so dass die Automatisierungseinheit (15) konfiguriert ist, Öffnungsgrade der Ventile (7 - 9) einzustellen und zu überwachen, und konfiguriert ist, Betriebssignale von oder zu der Pumpe (2) zu lesen, wobei die Automatisierungseinheit (15) konfiguriert ist zum:
Lesen einer Zeitreihe der Betriebssignale von oder zu der Pumpe (2);
Bestimmen einer Betriebsdauer der Pumpe (2) basierend auf der Zeitreihe von Betriebssignalen;
Vergleichen der Betriebsdauer mit einer vorbestimmten Dauer;
wenn die Betriebsdauer größer als die vorbestimmte Dauer ist:
Empfangen mindestens eines Statussignals, das einen Zustand des Ventils (7 - 9) anzeigt, von jedem der Ventile (7 - 9);
Auswählen eines Ventils (7 - 9) basierend auf den Statussignalen, wobei die Statussignale anzeigen, dass das ausgewählte Ventil (7 - 9) eingestellt ist, um den größten oder den kleinsten Durchfluss unter den Ventilen (7 - 9) zu ermöglichen;
Ändern des Grenzöffnungsgrads des ausgewählten Ventils (7 - 9) entweder durch Dekrementieren oder durch Inkrementieren; und
Anwenden des geänderten Grenzöffnungsgrads auf das ausgewählte Ventil (7 - 9), so dass ein Öffnungsgrad des ausgewählten Ventils (7 - 9) höchstens eingestellt werden kann, bis der Öffnungsgrad des ausgewählten Ventils (7 - 9) den geänderten Grenzöffnungsgrad erreicht.

10. Die Anlage nach Anspruch 9, wobei die Automatisierungseinheit (15) konfiguriert ist zum:
Abbilden eines Anfangsregelbereichs für das ausgewählte Ventil (7 - 9) auf einen neu definierten Regelbereich für das ausgewählte Ventil (7 - 9), wobei der neu definierte Regelbereich für das ausgewählte Ventil (7 - 9) auf den geänderten Grenzöffnungsgrad begrenzt ist.

11. Die Anlage nach Anspruch 9, wobei die Automatisierungseinheit (15) konfiguriert ist zum:
Erzeugen eines Begrenzungssignals, das den geänderten Grenzöffnungsgrad anzeigt;
Übertragen des Begrenzungssignals an das ausgewählte Ventil (7 - 9);
wobei das ausgewählte Ventil (7 - 9) konfiguriert ist zum:
Empfangen des Begrenzungssignals;
Verarbeiten des Begrenzungssignals, um den geänderten Grenzöffnungsgrad zu erhalten; und
Abbilden eines Anfangsregelbereichs des ausgewählten Ventils (7 - 9) auf einen neu definierten Regelbereich des ausgewählten Ventils (7 - 9), wobei der neu definierte Regelbereich des ausgewählten Ventils (7 - 9) auf den geänderten Grenzöffnungsgrad begrenzt ist.

12. Die Anlage nach einem der Ansprüche 9 bis 11, wobei die Automatisierungseinheit (15) konfiguriert ist zum:
Lesen einer Zeitreihe der Betriebssignale von oder zu der Pumpe (2), wobei jedes Betriebssignal der Zeitreihe anzeigt, dass die Pumpe (2) in Betrieb oder außer Betrieb ist;
Zählen einer Anzahl von Betriebssignalen, die anzeigen, dass die Pumpe (2) in Betrieb ist; und
Bestimmen einer Betriebsdauer der Pumpe (2) durch Multiplizieren eines ersten vorbestimmten Zeitintervalls mit der Anzahl von Betriebssignalen, die anzeigen, dass die Pumpe (2) in Betrieb ist.

13. Die Anlage nach einem der Ansprüche 9 bis 12, wobei die Automatisierungseinheit (15) konfiguriert ist zum:
Erzeugen eines Öffnungsgrads aus jedem Statussignal, das einen Zustand des Ventils (7 - 9) anzeigt;
Vergleichen der Ventile (7 - 9) untereinander hinsichtlich ihrer Öffnungsgrade; und
Auswählen des Ventils (7 - 9) basierend auf dem Vergleich, wobei das ausgewählte Ventil (7 - 9) den größten Öffnungsgrad unter den Ventilen (7 - 9) aufweist.

14. Computerprogramm, umfassend Anweisungen, um die Automatisierungseinheit (15) der Anlage nach einem der Ansprüche 9 bis 13 zu veranlassen, die Schritte des Verfahrens nach einem der Ansprüche 1 bis 8 auszuführen.

15. Computerlesbares nichtflüchtiges Medium, auf dem das Computerprogramm nach Anspruch 14 gespeichert ist.

## Revendications

1. Procédé de commande d'une installation de chauffage et/ou de ventilation et/ou de climatisation, l'installation comprenant une alimentation (1) en énergie thermique et au moins deux échangeurs d'énergie thermique (10-12) raccordés à une pompe (2) qui peut être actionnée pour créer un écoulement à travers au moins l'un des échangeurs (10-12), dans lequel chacun des échangeurs (10-12) comprend une vanne électromécanique réglable (7-9), dans lequel chacune des vannes (7-9) peut être actionnée pour moduler un écoulement à travers son échangeur (10-12) entre une position ouverte permettant un écoulement à travers son échangeur (10-12) et une position fermée bloquant un écoulement à travers son échangeur (10-12), dans lequel les vannes (7-9) et la pompe (2) sont en communication avec une unité de commande (15) de telle sorte que l'unité de commande (15) soit configurée pour régler et surveiller des degrés d'ouverture des vannes (7-9) et/ou des pourcentages d'ouverture des vannes (7-9) et pour lire des signaux de fonctionnement en provenance de la pompe (2) ou à destination de celle-ci, **caractérisé en ce que** le procédé comprend les étapes suivantes :
l'unité de commande (15) lit une série chronologique des signaux de fonctionnement en provenance de la pompe (2) ou à destination de celle-ci ;
l'unité de commande (15) détermine une durée de fonctionnement de la pompe (2) sur la base de la série chronologique de signaux de fonctionnement ;
l'unité de commande (15) compare la durée de fonctionnement à une durée prédéterminée ;
si la durée de fonctionnement est plus longue que la durée prédéterminée :
l'unité de commande (15) reçoit au moins un signal d'état indiquant un état de la vanne (7-9) en provenance de chacune des vannes (7-9) ;
l'unité de commande (15) sélectionne une vanne (7-9) sur la base des signaux d'état, dans lequel les signaux d'état indiquent que la vanne sélectionnée (7-9) est réglée pour permettre l'écoulement le plus grand ou le plus faible parmi les vannes (7-9) ;
l'unité de commande (15) modifie un degré d'ouverture limite de la vanne sélectionnée (7-9) soit par décrémentation, soit par incrémentation ; et
l'unité de commande (15) applique le degré d'ouverture limite modifié à la vanne sélectionnée (7-9) de telle sorte qu'un degré d'ouverture de la vanne sélectionnée (7-9) puisse au plus être réglé jusqu'à ce que le degré d'ouverture de la vanne sélectionnée (7-9) atteigne le degré d'ouverture limite modifié.

2. Le procédé selon la revendication 1, dans lequel le procédé comprend les étapes suivantes :
l'unité de commande (15) lit une série chronologique des signaux de fonctionnement en provenance de la pompe (2) ou à destination de celle-ci, dans lequel chaque signal de fonctionnement de la série chronologique indique que la pompe (2) est en service ou est hors service ;
l'unité de commande (15) compte un nombre de signaux de fonctionnement indiquant que la pompe (2) est en service ; et
l'unité de commande (15) détermine une durée de fonctionnement de la pompe (2) en multipliant un premier intervalle de temps prédéterminé par le nombre de signaux de fonctionnement indiquant que la pompe (2) est en service.

3. Le procédé selon l'une des revendications 1 à 2, dans lequel le procédé comprend les étapes suivantes :
l'unité de commande (15) génère un degré d'ouverture à partir de chaque signal d'état indiquant un état de la vanne (7-9) ;
l'unité de commande (15) pour chaque vanne (7-9) utilise le degré d'ouverture généré de la vanne (7-9) et une caractéristique de la vanne (7-9) pour déterminer un écoulement à travers la vanne (7-9) ;
l'unité de commande (15) compare les vannes (7-9) les unes aux autres en termes de leurs écoulements ; et
l'unité de commande (15) sélectionne la vanne (7-9) sur la base de la comparaison, dans lequel la vanne sélectionnée (7-9) présente l'écoulement le plus grand parmi les vannes (7-9).

4. Le procédé selon l'une des revendications 1 à 2, dans lequel le procédé comprend les étapes suivantes :
l'unité de commande (15) génère un degré d'ouverture à partir de chaque signal d'état indiquant un état de la vanne (7-9) ;
l'unité de commande (15) pour chaque vanne (7-9) utilise le degré d'ouverture généré de la vanne (7-9) et une caractéristique de la vanne (7-9) pour déterminer un écoulement à travers la vanne (7-9) ;
l'unité de commande (15) compare les vannes (7-9) les unes aux autres en termes de leurs écoulements ; et
l'unité de commande (15) sélectionne la vanne (7-9) sur la base de la comparaison, dans lequel la vanne sélectionnée (7-9) présente l'écoulement le plus faible parmi les vannes (7-9).

5. Le procédé selon l'une des revendications 1 à 2, dans lequel le procédé comprend les étapes suivantes :
l'unité de commande (15) reçoit une série chronologique de signaux d'état en provenance de chacune des vannes (7-9), chaque signal d'état indiquant un état de la vanne (7-9) ;
l'unité de commande (15) génère des mesures d'état à partir des signaux d'état, dans lequel chaque mesure d'état indique qu'une vanne (7-9) parmi les vannes (7-9) est fermée ou est ouverte ;
l'unité de commande (15) compte pour chaque vanne (7-9) un nombre de mesures d'état indiquant que la vanne (7-9) est ouverte ;
l'unité de commande (15) détermine pour chaque vanne (7-9) une durée d'ouverture en multipliant un deuxième intervalle de temps prédéterminé par le nombre de mesures d'état indiquant que la vanne (7-9) est ouverte ;
l'unité de commande (15) compare les vannes (7-9) les unes aux autres en termes de leurs durées d'ouverture ; et
l'unité de commande (15) sélectionne la vanne (7-9) sur la base de la comparaison, dans lequel la vanne sélectionnée (7-9) présente la durée d'ouverture la plus longue.

6. Le procédé selon l'une des revendications 1 à 2, dans lequel le procédé comprend les étapes suivantes :
l'unité de commande (15) reçoit une série chronologique de signaux d'état en provenance de chacune des vannes (7-9), chaque signal d'état indiquant un état de la vanne (7-9) ;
l'unité de commande (15) génère des mesures d'état à partir des signaux d'état, dans lequel chaque mesure d'état indique qu'une vanne (7-9) parmi les vannes (7-9) est fermée ou est ouverte ;
l'unité de commande (15) compte pour chaque vanne (7-9) un nombre de mesures d'état indiquant que la vanne (7-9) est ouverte ;
l'unité de commande (15) détermine pour chaque vanne (7-9) une durée d'ouverture en multipliant un deuxième intervalle de temps prédéterminé par le nombre de mesures d'état indiquant que la vanne (7-9) est ouverte ;
l'unité de commande (15) compare les vannes (7-9) les unes aux autres en termes de leurs durées d'ouverture ; et
l'unité de commande (15) sélectionne la vanne (7-9) sur la base de la comparaison, dans lequel la vanne sélectionnée (7-9) présente la durée d'ouverture la plus courte.

7. Le procédé selon l'une des revendications 1 à 6, dans lequel le procédé comprend les étapes suivantes :
l'unité de commande (15) interroge la vanne sélectionnée (7-9) ;
l'unité de commande (15) reçoit le degré d'ouverture limite en provenance de la vanne sélectionnée (7-9) en réponse à l'interrogation ;
l'unité de commande (15) modifie le degré d'ouverture limite reçu de la vanne sélectionnée (7-9) soit par décrémentation, soit par incrémentation ; et
l'unité de commande (15) applique le degré d'ouverture limite modifié et reçu à la vanne sélectionnée (7-9) de telle sorte qu'un degré d'ouverture de la vanne sélectionnée (7-9) puisse au plus être réglé jusqu'à ce qu'il atteigne le degré d'ouverture limite modifié et reçu.

8. Le procédé selon l'une des revendications 1 à 7, dans lequel le procédé comprend les étapes suivantes :
l'unité de commande (15) interroge les vannes (7-9) ;
l'unité de commande (15) reçoit un degré d'ouverture limite en provenance de chaque vanne (7-9) en réponse à l'interrogation ;
l'unité de commande (15) modifie le degré d'ouverture limite reçu de la vanne sélectionnée (7-9) soit par décrémentation, soit par incrémentation ; et
l'unité de commande (15) applique le degré d'ouverture limite modifié et reçu à la vanne sélectionnée (7-9) de telle sorte qu'un degré d'ouverture de la vanne sélectionnée (7-9) puisse au plus être réglé jusqu'à ce qu'il atteigne le degré d'ouverture limite modifié et reçu.

9. Installation de chauffage et/ou de ventilation et/ou de climatisation, l'installation comprenant une unité de commande (15), une pompe (2), une alimentation (1) en énergie thermique et au moins deux échangeurs d'énergie thermique (10-12) raccordés à la pompe (2) qui peut être actionnée pour créer un écoulement à travers au moins l'un des échangeurs (10-12), dans laquelle chacun des échangeurs (10-12) comprend une vanne électromécanique réglable (7-9), dans laquelle chacune des vannes (7-9) peut être actionnée pour moduler un écoulement à travers son échangeur (10-12) entre une position ouverte permettant un écoulement à travers son échangeur (10-12) et une position fermée bloquant un écoulement à travers son échangeur (10-12), dans laquelle les vannes (7-9) et la pompe (2) sont en communication avec l'unité de commande (15) de telle sorte que l'unité de commande (15) soit configurée pour régler et surveiller des degrés d'ouverture des vannes (7-9) et soit configurée pour lire des signaux de fonctionnement en provenance de la pompe (2) ou à destination de celle-ci, l'unité de commande (15) étant configurée pour :
lire une série chronologique des signaux de fonctionnement en provenance de la pompe (2) ou à destination de celle-ci ;
déterminer une durée de fonctionnement de la pompe (2) sur la base de la série chronologique de signaux de fonctionnement ;
comparer la durée de fonctionnement à une durée prédéterminée ;
si la durée de fonctionnement est plus longue que la durée prédéterminée :
recevoir au moins un signal d'état indiquant un état de la vanne (7-9) en provenance de chacune des vannes (7-9) ;
sélectionner une vanne (7-9) sur la base des signaux d'état, dans laquelle les signaux d'état indiquent que la vanne sélectionnée (7-9) est réglée pour permettre l'écoulement le plus grand ou le plus faible parmi les vannes (7-9) ;
modifier le degré d'ouverture limite de la vanne sélectionnée (7-9) soit par décrémentation, soit par incrémentation ; et
appliquer le degré d'ouverture limite modifié à la vanne sélectionnée (7-9) de telle sorte qu'un degré d'ouverture de la vanne sélectionnée (7-9) puisse au plus être réglé jusqu'à ce que le degré d'ouverture de la vanne sélectionnée (7-9) atteigne le degré d'ouverture limite modifié.

10. L'installation selon la revendication 9, dans laquelle l'unité de commande (15) est configurée pour :
mettre en correspondance une plage de régulation initiale pour la vanne sélectionnée (7-9) avec une plage de régulation nouvellement définie pour la vanne sélectionnée (7-9), dans laquelle la plage de régulation nouvellement définie pour la vanne sélectionnée (7-9) est limitée au degré d'ouverture limite modifié.

11. L'installation selon la revendication 9, dans laquelle l'unité de commande (15) est configurée pour :
générer un signal de limitation indiquant le degré d'ouverture limite modifié ;
transmettre le signal de limitation à la vanne sélectionnée (7-9) ;
dans laquelle la vanne sélectionnée (7-9) est configurée pour :
recevoir le signal de limitation ;
traiter le signal de limitation pour obtenir le degré d'ouverture limite modifié ; et
mettre en correspondance une plage de régulation initiale de la vanne sélectionnée (7-9) avec une plage de régulation nouvellement définie de la vanne sélectionnée (7-9), dans laquelle la plage de régulation nouvellement définie de la vanne sélectionnée (7-9) est limitée au degré d'ouverture limite modifié.

12. L'installation selon l'une des revendications 9 à 11, dans laquelle l'unité de commande (15) est configurée pour :
lire une série chronologique des signaux de fonctionnement en provenance de la pompe (2) ou à destination de celle-ci, dans laquelle chaque signal de fonctionnement de la série chronologique indique que la pompe (2) est en service ou est hors service ;
compter un nombre de signaux de fonctionnement indiquant que la pompe (2) est en service ; et
déterminer une durée de fonctionnement de la pompe (2) en multipliant un premier intervalle de temps prédéterminé par le nombre de signaux de fonctionnement indiquant que la pompe (2) est en service.

13. L'installation selon l'une des revendications 9 à 12, dans laquelle l'unité de commande (15) est configurée pour :
générer un degré d'ouverture à partir de chaque signal d'état indiquant un état de la vanne (7-9) ;
comparer les vannes (7-9) les unes aux autres en termes de leurs degrés d'ouverture ; et
sélectionner la vanne (7-9) sur la base de la comparaison, dans laquelle la vanne sélectionnée (7-9) présente le degré d'ouverture le plus grand parmi les vannes (7-9).

14. Programme informatique comprenant des instructions pour amener l'unité de commande (15) de l'installation selon l'une des revendications 9 à 13 à exécuter les étapes du procédé selon l'une des revendications 1 à 8.

15. Support non-transitoire lisible par ordinateur sur lequel est stocké le programme informatique selon la revendication 14.
